# EUROPEAN PATENT APPLICATION

(11) **EP 2 584 487 A1**
(43) Date of publication of application: **24.04.2013**
(21) Application number: 11797787.6
(22) Date of filing: 13.06.2011
(51) Int. Cl.: G06F 21/24, G06Q 30/00, G06Q 50/00

(54) **CONTENT DUPLICATION SYSTEM, CONTENT USAGE SYSTEM, MANAGEMENT SERVER, CONTENT USAGE METHOD, CONTENT USAGE PROGRAM, AND INTEGRATED CIRCUIT**

(30) Priority: 21.06.2010 US 356799 P
(71) Applicant: Panasonic Corporation, Kadoma-shi Osaka 571-8501 (JP)
(72) Inventor: YAMAGUCHI, Takahiro, Osaka 540-6207 (JP); YAMAMOTO, Masaya, Osaka 540-6207 (JP)
(74) Representative: Grünecker, Kinkeldey, Stockmair & Schwanhäusser
(86) International application number: PCT/JP2011/003351
(87) International publication number: WO 2011/161898

(57) **Abstract**

Provided is a content copy system that distributes main content (e.g., movie) and sub-content using a rental optical medium and properly recovers the usage fee for sub-content separately from the usage fee for main content. The content copy system includes: a content usage apparatus comprising an acquisition unit that acquires usage ID provided thereto in exchange for the usage fee for content, a transmission unit that transmits the acquired usage ID to the management server, and a usage unit that receives a decryption key from the management server and records the decryption key and encrypted content on a recording medium; and a management server comprising a storage unit storing usage IDs and decryption keys in one-to-one correspondence, and a control unit that, when receiving usage ID from the content usage apparatus, transmits a decryption key for content corresponding to the usage ID and performs settlement processing for the usage ID.

## Description

### [Technical Field]

The present invention relates to a digital content copy system, and in particular to collection of the fee for content that is distributed by being recorded on a rental content recording medium.

### [Background Art]

Recent years have witnessed the spread of services where, in addition to main content (e.g., a movie) to be played back on a Blu-ray disc (BD) player, sub-content (SD-VIDEO) is distributed by being recorded on a BD. The sub-content is to be copied to an SD memory card so it can be played back on a mobile device or the like other than the BD player. The sub-content denotes content that is valuable by itself, such as behind-the-scene video, premium video, or video that has no relation to the main content. It is the desire of content producers to properly receive the fee for the sub-content itself while using the existing marketing channels via which the main content is distributed. For this reason, sub-content recorded on a BD is encrypted, and a decryption key for the encrypted sub-content is managed by an authentication server. A coupon ID is required for the BD player to obtain the decryption key. More specifically, an insert with the coupon ID printed thereon is enclosed in a package of the BD. The user operates the BD player to input the coupon ID in accordance with instructions displayed on a screen. The BD player notifies the coupon ID to the authentication server. The authentication server checks whether or not the notified coupon ID is one of the coupon IDs that have been pre-registered, and allows downloading of the decryption key.

When the BD player is allowed to receive the decryption key, the BD player reads the encrypted sub-content from the BD, and stores the read sub-content and the decryption key into an SD memory card. The sub-content thus copied to the SD memory card is played back on a mobile device such as a mobile phone. Here, the usage fee for the sub-content may be included in the sales price of the disc ahead of time.

### [Citation List]

### [Patent Literature]

[Patent Literature 1]
JP Patent Application Publication No. H05-257816

### [Summary of Invention]

### [Technical Problem]

Incidentally, in the rental business, the same disc is used by a plurality of users unlike the case of the sales business. In the beginning, it is unknown how many times the disc will be rented, and how many percentage of the users will want to use the sub-content. Therefore, in the rental business, the usage fee for the sub-content cannot be included in the sales price of the disc ahead of time. If the usage fee for the sub-content were included in the sales price of the disc in the expectation that the sub-content will be used for a predetermined number of times, the disc will be expensive, and the rental fee of the disc will be high accordingly. This may make the rental business that enables low-cost rental of discs unsustainable.

In order to solve the above problem, the present invention aims to provide a content copy system capable of properly recovering the fee for sub-content recorded on a BD separately from the rental fee of the BD associated with the main content.

### [Solution to Problem]

To solve the above problem, one aspect of the present invention is a content copy system including a management server and a content usage apparatus that uses encrypted content recorded on a content recording medium. The content usage apparatus comprises: an acquisition unit configured to acquire a usage ID that is provided thereto in exchange for a usage fee for the encrypted content; a transmission unit configured to transmit the acquired usage ID to the management server in order to acquire one of content decryption keys that corresponds to the acquired usage ID; and a copy unit configured to receive the one of content decryption keys from the management server, and record the one of content decryption keys and the encrypted content on another recording medium. The management server comprises: a storage unit storing therein, in one-to-one correspondence, (i) usage IDs each for managing a different one of contents and (ii) the content decryption keys; and a control unit configured to, upon receiving the usage ID transmitted from the content usage apparatus, refer to the storage unit, transmit the one of content decryption keys that corresponds to the received usage ID to the content usage apparatus, and perform settlement processing for the received usage ID.

### [Advantageous Effects of Invention]

Each time the content usage apparatus copies content to another recording medium, the content copy system with the above structure, which is one aspect of the present invention, enables the management server to properly recover the usage fee in proportion to the frequency of copying.

### [Brief Description of Drawings]

FIG. 1 shows an overall structure of a key issuing authority, an authentication server, a content production apparatus, a first recording medium apparatus, a playback/copy apparatus, a second recording medium apparatus, and a playback apparatus in Embodiment 1 of the present invention.
FIG. 2 shows the structure of the key issuing authority in Embodiment 1 of the present invention.
FIGs. 3A to 3C show the structure of pieces of data handled by the key issuing authority pertaining to Embodiment 1 of the present invention.
FIGs. 4A and 4B show the structure of pieces of data handled by the key issuing authority pertaining to Embodiment 1 of the present invention.
FIG. 5 is a flowchart showing operations of the key issuing authority pertaining to Embodiment I of the present invention.
FIG. 6 shows the structure of the authentication server in Embodiment 1 of the present invention.
FIG. 7 shows the structure of mutual authentication in Embodiment 1 of the present invention.
FIGs. 8A and B show the structure of pieces of data handled by the authentication server in Embodiment I of the present invention.
FIG. 9 shows the structure of a piece of data handled by the authentication server in Embodiment 1 of the present invention.
FIG. 10 shows the structure of another piece of data handled by the authentication server in Embodiment 1 of the present invention.
FIG. 11 shows the structure of yet another piece of data handled by the authentication server in Embodiment 1 of the present invention.
FIG. 12 shows the structure of yet another piece of data handled by the authentication server in Embodiment I of the present invention.
FIG. 13 is a flowchart of authentication processing pertaining to Embodiment I of the present invention.
FIG. 14 shows the structure of a key distribution server and the recording medium apparatus in Embodiment 1 of the present invention.
FIG. 15 is a flowchart showing operations of the content production apparatus pertaining to Embodiment I of the present invention.
FIG. 16 shows the structure of the first recording medium apparatus after being packaged in Embodiment 1 of the present invention.
FIG. 17 shows the structure of the first recording medium apparatus in Embodiment 1 of the present invention.
FIG. 18 shows the structure of the playback/copy apparatus in Embodiment 1 of the present invention.
FIG. 19 shows a detailed structure of the playback/copy apparatus in Embodiment 1 of the present invention.
FIGs. 20A and 20B show the structure of pieces of data handled by the playback/copy apparatus pertaining to Embodiment 1 of the present invention.
FIG. 21 is a flowchart showing operations of the playback/copy apparatus pertaining to Embodiment 1 of the present invention.
FIG. 22 shows the structure of the second recording medium apparatus before copying of copy data in Embodiment 1 of the present invention.
FIG. 23 shows the structure of the second recording medium apparatus after copying of the copy data in Embodiment 1 of the present invention.
FIG. 24 shows the structure of the playback apparatus in Embodiment 1 of the present invention.
FIG. 25 is a flowchart showing operations of the playback apparatus 500 in Embodiment 1 of the present invention.
FIG. 26 shows the structure of the content production apparatus as being divided in Embodiment 1 of the present invention.
FIG. 27 shows a variation of the structure of the playback/copy apparatus in Embodiment 1 of the present invention.
FIG. 28 is a flowchart showing copy operations of the playback/copy apparatus pertaining to Embodiment I of the present invention.
FIG. 29 shows an overall structure of the key issuing authority, the authentication server, the content production apparatus, the first recording medium apparatus, the playback/copy apparatus, the second recording medium apparatus, the playback apparatus, and a rental shop apparatus in Embodiment 2 of the present invention.
FIG. 30 shows the structure of a piece of data handled by the authentication server in Embodiment 2 of the present invention.
FIG. 31 shows the structure of another piece of data handled by the authentication server in Embodiment 2 of the present invention.
FIG. 32 shows the structure of the rental shop apparatus in Embodiment 2 of the present invention.
FIG. 33 is a flowchart showing operations of the rental shop apparatus in Embodiment 2 of the present invention.
FIG. 34 shows the structure of a piece of data handled by the authentication server in Embodiment 2 of the present invention.
FIG. 35 shows the structure of a piece of data handled by the authentication server in Embodiment 2 of the present invention.
FIG. 36 shows the structure of the authentication server in Embodiment 2 of the present invention.
FIG. 37 shows the structure of a piece of data handled by the authentication server in Embodiment 2 of the present invention.
FIG. 38 shows the structure of another piece of data handled by the authentication server in Embodiment 2 of the present invention.
FIG. 39 shows the structure of yet another piece of data handled by the authentication server in Embodiment 2 of the present invention.
FIG. 40 is a flowchart showing operations of the authentication server in Embodiment 2 of the present invention.
FIG. 41 shows an overall structure of the key issuing authority, the authentication server, the content production apparatus, the first recording medium apparatus, the playback/copy apparatus, the second recording medium apparatus, the playback apparatus, and an application server in Embodiment 3 of the present invention.
FIG. 42 shows the structure of the application server pertaining to Embodiment 3 of the present invention.
FIG. 43 shows the structure of a piece of data handled by the authentication server in Embodiment 3 of the present invention.
FIG. 44 is a flowchart showing operations of the authentication server in Embodiment 3 of the present invention.
FIG. 45 shows the structure of another piece of data handled by the authentication server pertaining to Embodiment 3 of the present invention.
FIG. 46 shows the structure of a content copy system pertaining to Embodiment 4 of the present invention.
FIG. 47 is a flowchart showing operations of the content copy system pertaining to Embodiment 4 of the present invention.
FIG. 48 shows the structure of a content copy system pertaining to Embodiment 5 of the present invention.
FIG. 49 is a flowchart showing operations of the content copy system pertaining to Embodiment 5 of the present invention.
FIG. 50 is a flowchart showing operations of the content copy system pertaining to Embodiment 5 of the present invention (continuing from FIG. 49).

### [Description of Embodiments]

One aspect of the present invention is a content copy system including a management server and a content usage apparatus that uses encrypted content recorded on a content recording medium. The content usage apparatus comprises: an acquisition unit configured to acquire a usage ID that is provided thereto in exchange for a usage fee for the encrypted content; a transmission unit configured to transmit the acquired usage ID to the management server in order to acquire one of content decryption keys that corresponds to the acquired usage ID; and a copy unit configured to receive the one of content decryption keys from the management server, and record the one of content decryption keys and the encrypted content on another recording medium. The management server comprises: a storage unit storing therein, in one-to-one correspondence, (i) usage IDs each for managing a different one of contents and (ii) the content decryption keys; and a control unit configured to, upon receiving the usage ID transmitted from the content usage apparatus, refer to the storage unit, transmit the one of content decryption keys that corresponds to the received usage ID to the content usage apparatus, and perform settlement processing for the received usage ID.

In the above content copy system, (i) collection of the usage fee for the encrypted content may be managed by a collection management apparatus, (ii) the usage ID may be provided to the acquisition unit upon the collection management apparatus acknowledging that the usage fee for the encrypted content has been collected, and (iii) the settlement processing may be the processing to recover the usage fee for the encrypted content from the collection management apparatus.

The above structure makes it possible to reliably recover the usage fee without the management server directly managing the collection of the usage fee.

In the above content copy system, (i) the collection management apparatus may be used in a rental shop that rents the content recording medium, (ii) the usage fee for the encrypted content may be collected in the rental shop when the content recording medium is to be rented, and (iii) each of the usage IDs stored in the storage unit may be notified by the collection management apparatus as corresponding to a different one of encrypted contents recorded on rented content recording media.

With the above structure, the usage fee can be collected, for example, by cash in the rental shop, and the encrypted content can be distributed via the rental content recording medium.

In the above content copy system, (i) the collection management apparatus may print the usage ID to be provided to the acquisition unit on a recording sheet upon acknowledging that the usage fee for the encrypted content has been collected, and (ii) the acquisition unit may acquire the usage ID provided thereto via an input operation performed by a user who has referred to the recording sheet with the usage ID printed thereon.

With the above structure, the usage ID can be provided via the recording sheet.

In the above content copy system, (i) the content recording medium may be for rental only and may have recorded thereon main content that is different from the encrypted content, and (ii) collection of the usage fee for the encrypted content may be performed separately from collection of a usage fee for the main content.

With the above structure, the encrypted content can be distributed by using the marketing channels via which the main content is distributed, and the usage fee for the encrypted content can be collected separately from the usage fee for the main content.

In the above content copy system, (i) said another recording medium may have recorded thereon a media ID and a media key block (MKB) that are used in generating a media key, (ii) the transmission unit may read the media ID and the MKB from said another recording medium, and transmit the read media ID and MKB to the management server in addition to the usage ID, (iii) the control unit may transmit the one of content decryption keys to the content usage apparatus after generating the media key with use of the media ID and the MKB and encrypting the one of content decryption keys with use of the media key, and (iv) the copy unit may record the one of content decryption keys that has been encrypted by the control unit on said another recording medium.

The above structure allows encrypting and decrypting the decryption key by using the encryption/decryption method used for said another recording medium.

The above content copy system may further include a key issuing authority that issues a private key and a certificate including a public key to be paired with the private key. Here, the key issuing authority may securely transmit the certificate to the management server, the certificate showing whether or not the content usage apparatus is an authorized apparatus. The control unit may perform mutual authentication with the content usage apparatus by using the private key and the public key before transmission of the one of content decryption keys, and transmit the one of content decryption keys to the content usage apparatus only when it has been confirmed that the content usage apparatus is an authorized apparatus.

With the above structure, only authorized content usage apparatuses are allowed to copy the encrypted content.

In the above content copy system, the control unit may limit the number of transmissions of the one of content decryption keys to a predetermined number.

The above structure allows arbitrarily determining the number of times the encrypted content can be copied (hereinafter "the number of copy").

In the above content copy system, (i) the content recording medium may have recorded thereon a copy library, (ii) the copy library may be used in reading the encrypted content from the content recording medium and in recording the encrypted content on said another recording medium, and (iii) the copy unit may record the encrypted content on said another recording medium by reading the copy library from the content recording medium and executing the read copy library.

The above structure allows providing the encrypted content and the copy library by recording them on a single content recording medium. Therefore, the above structure makes it possible to define content copy processing for each content, thus enabling suitable copy processing for each content.

Another aspect of the present invention is a content usage apparatus that uses encrypted content recorded on a content recording medium and is used together with a management server. The management server comprises: a storage unit storing therein, in one-to-one correspondence, (i) usage IDs each for managing a different one of contents and (ii) content decryption keys; and a control unit configured to, upon receiving a usage ID transmitted from the content usage apparatus, refer to the storage unit, transmit one of the content decryption keys that corresponds to the received usage ID to the content usage apparatus, and perform settlement processing for the received usage ID. The content usage apparatus comprises: an acquisition unit configured to acquire the usage ID that is provided thereto in exchange for a usage fee for the encrypted content; a transmission unit configured to transmit the acquired usage ID to the management server in order to acquire the one of the content decryption keys that corresponds to the acquired usage ID; and a copy unit configured to receive the one of the content decryption keys from the management server, and record the one of the content decryption keys and the encrypted content on another recording medium.

Another aspect of the present invention is a content usage method for using encrypted content recorded on a content recording medium, the content usage method being used together with a management server. The management server comprises: a storage unit storing therein, in one-to-one correspondence, (i) usage IDs each for managing a different one of contents and (ii) content decryption keys; and a control unit configured to, upon receiving a usage ID transmitted from a content usage apparatus, refer to the storage unit, transmit one of the content decryption keys that corresponds to the received usage ID to the content usage apparatus, and perform settlement processing for the received usage ID. The content usage method comprises: an acquisition step of acquiring the usage ID that is provided in exchange for a usage fee for the encrypted content; a transmission step of transmitting the acquired usage ID to the management server in order to acquire the one of the content decryption keys that corresponds to the acquired usage ID; and a copy step of receiving the one of the content decryption keys from the management server, and recording the one of the content decryption keys and the encrypted content on another recording medium.

Another aspect of the present invention is a content usage program used in a content usage apparatus that uses encrypted content recorded on a content recording medium and is used together with a management server. The management server comprises: a storage unit storing therein, in one-to-one correspondence, (i) usage IDs each for managing a different one of contents and (ii) content decryption keys; and a control unit configured to, upon receiving a usage ID transmitted from the content usage apparatus, refer to the storage unit, transmit one of the content decryption keys that corresponds to the received usage ID to the content usage apparatus, and perform settlement processing for the received usage ID. The content usage program causes a computer to perform: an acquisition step of acquiring the usage ID that is provided in exchange for a usage fee for the encrypted content; a transmission step of transmitting the acquired usage ID to the management server in order to acquire the one of the content decryption keys that corresponds to the acquired usage ID; and a copy step of receiving the one of the content decryption keys from the management server, and recording the one of the content decryption keys and the encrypted content on another recording medium.

Another aspect of the present invention is an integrated circuit used in a content usage apparatus that uses encrypted content recorded on a content recording medium and is used together with a management server. The management server comprises: a storage unit storing therein, in one-to-one correspondence, (i) usage IDs each for managing a different one of contents and (ii) content decryption keys; and a control unit configured to, upon receiving a usage ID transmitted from the content usage apparatus, refer to the storage unit, transmit one of the content decryption keys that corresponds to the received usage ID to the content usage apparatus, and perform settlement processing for the received usage ID. The integrated circuit comprises: an acquisition unit configured to acquire the usage ID that is provided thereto in exchange for a usage fee for the encrypted content; a transmission unit configured to transmit the acquired usage ID to the management server in order to acquire the one of the content decryption keys that corresponds to the acquired usage ID; and a copy unit configured to receive the one of the content decryption keys from the management server, and record the one of the content decryption keys and the encrypted content on another recording medium.

Each time content is copied to another recording medium, the above structure enables the management server to properly recover the usage fee in proportion to the frequency of copying.

Another aspect of the present invention is a management server used together with a content usage apparatus that uses encrypted content recorded on a content recording medium. The content usage apparatus comprises: an acquisition unit configured to acquire a usage ID that is provided thereto in exchange for a usage fee for the encrypted content; a transmission unit configured to transmit the acquired usage ID to the management server in order to acquire one of content decryption keys that corresponds to the acquired usage ID; and a copy unit configured to receive the one of content decryption keys from the management server, and record the one of content decryption keys and the encrypted content on another recording medium. The management server comprises: a storage unit storing therein, in one-to-one correspondence, (i) usage IDs each for managing a different one of contents and (ii) the content decryption keys; and a control unit configured to, upon receiving the usage ID transmitted from the content usage apparatus, refer to the storage unit, transmit the one of content decryption keys that corresponds to the received usage ID to the content usage apparatus, and perform settlement processing for the received usage ID.

Each time content is copied to another recording medium, the above structure enables proper recovery of the usage fee in proportion to the frequency of copying.

The following describes embodiments of the present invention in detail with reference to the accompanying drawings.

### [Embodiment 1]

### <Overall Structure>

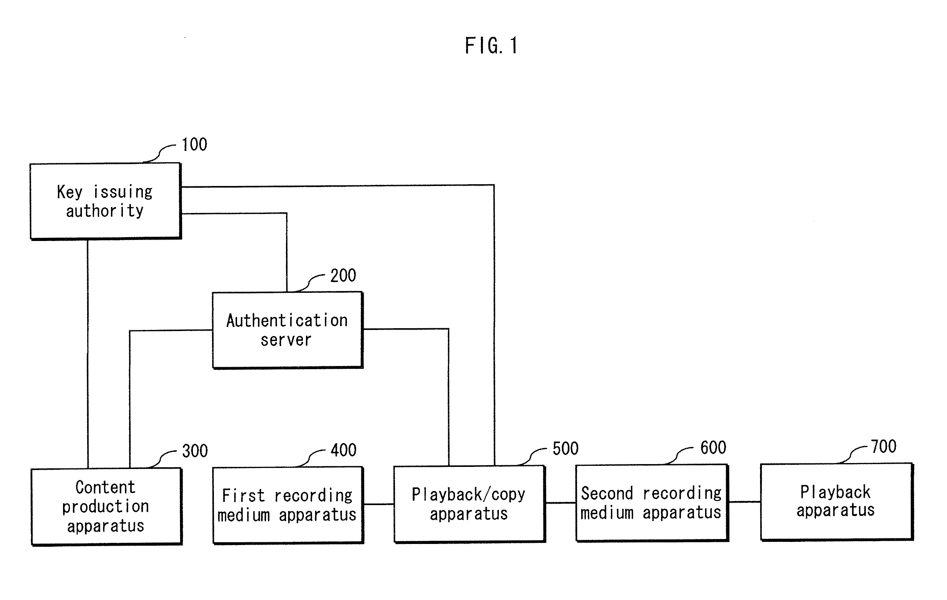

FIG. 1 shows an overall structure of a digital content copy system in Embodiment 1 of the present invention. The digital content copy system includes a key issuing authority 100, an authentication server 200, a content production apparatus 300, a first recording medium apparatus 400, a playback/copy apparatus 500, a second recording medium apparatus 600, and a playback apparatus 700.

Note that the key issuing authority 100 and the content production apparatus 300 respectively represent an apparatus that belongs to a key issuer and an apparatus that belongs to a content producer. The following describes a case where the first recording medium apparatus is an optical medium such as a Blu-ray ROM disc and a DVD-ROM, and the second recording medium apparatus is a memory device such as an SD card and USB memory.

### <Detailed Structure of Key Issuing Authority 100>

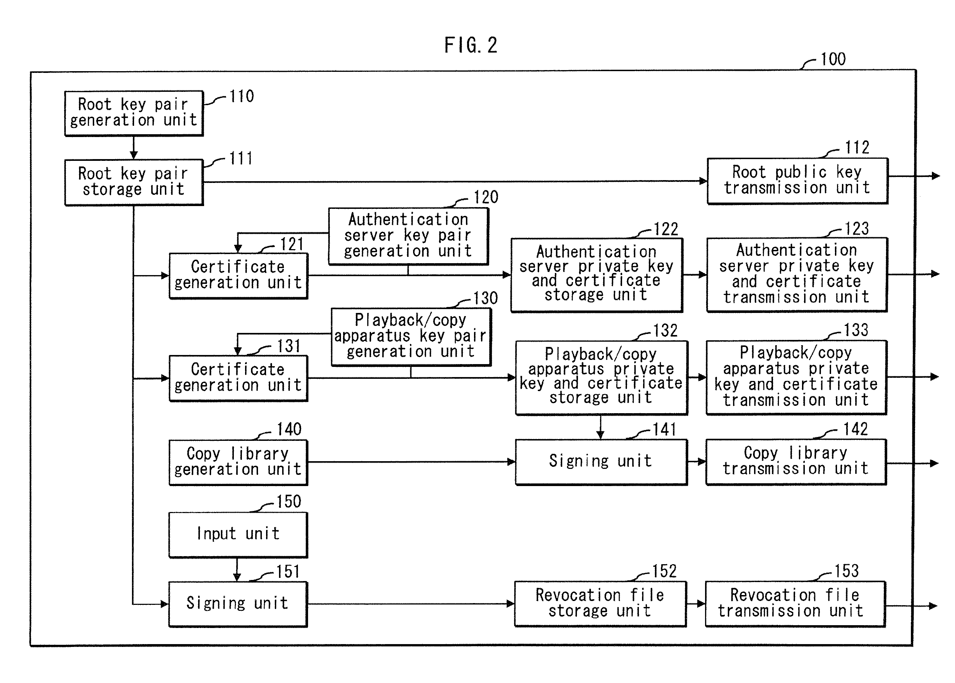

FIG. 2 shows a detailed structure of the key issuing authority 100.

As shown in FIG. 2, the key issuing authority 100 includes a root key pair generation unit 110, a root key pair storage unit 111, a root public key transmission unit 112, an authentication server key pair generation unit 120, a certificate generation unit 121, an authentication server private key and certificate storage unit 122, an authentication server private key and certificate transmission unit 123, a playback/copy apparatus key pair generation unit 130, a certificate generation unit 131, a playback/copy apparatus private key and certificate storage unit 132, a playback/copy apparatus private key and certificate transmission unit 133, a copy library generation unit 140, a signing unit 141, a copy library transmission unit 142, an input unit 150, a signing unit 151, a revocation file storage unit 152, and a revocation file transmission unit 153.

The root key pair generation unit 110 generates a key pair of the key issuing authority 100 consisting of a root public key and a root private key, which becomes a basis for security in the digital content copy system.

The root key pair storage unit 111 stores therein the key pair consisting of the root public key and the root private key generated by the root key pair generation unit 110.

The root public key transmission unit 112 transmits the root public key stored in the root key pair storage unit 111 to the authentication server 200 and the playback/copy apparatus 500.

The authentication server key pair generation unit 120 generates a key pair consisting of an authentication server public key and an authentication server private key used in the authentication server 200.

The certificate generation unit 121 generates an authentication server certificate, to which a signature is attached, including an authentication server ID, the authentication server public key generated by the authentication server key pair generation unit 120, and date/time information.

The authentication server private key and certificate storage unit 122 stores therein the authentication server private key generated by the authentication server key pair generation unit 120 and the authentication server certificate generated by the certificate generation unit 121.

The authentication server private key and certificate transmission unit 123 transmits, to the authentication server 200, the authentication server private key and the authentication server certificate stored in the authentication server private key and certificate storage unit 122.

The playback/copy apparatus key pair generation unit 130 generates a key pair consisting of a playback/copy apparatus public key and a playback/copy apparatus private key used in the playback/copy apparatus 500.

The certificate generation unit 131 generates a playback/copy apparatus certificate. The playback/copy apparatus certificate includes a licensee ID, a model ID, a certificate ID, the playback/copy apparatus public key generated by the playback/copy apparatus key pair generation unit 130, and date/time information. A signature generated for these pieces of information is attached to the playback/copy apparatus certificate.

The playback/copy apparatus private key and certificate storage unit 132 stores therein the playback/copy apparatus private key generated by the playback/copy apparatus key pair generation unit 130 and the playback/copy apparatus certificate generated by the certificate generation unit 131.

The playback/copy apparatus private key and certificate transmission unit 133 transmits, to the playback/copy apparatus 500, the playback/copy apparatus private key and the playback/copy apparatus certificate stored in the playback/copy apparatus private key and certificate storage unit 132.

The copy library generation unit 140 generates a copy library used to establish communication between a copying function of the playback/copy apparatus 500 and an interactive function.

The signing unit 141 attaches a signature to copy library information including, in addition to the copy library generated by the copy library generation unit 140, a copy library ID, version information, and date/time information.

The copy library transmission unit 142 transmits the copy library information to which the signature has been attached by the signing unit 141 to the content production apparatus 300.

The input unit 150 receives, as inputs, the licensee ID, the model ID, the certificate ID and the server ID to be revoked.

The signing unit 151 reads a revocation file stored in the revocation file storage unit 152, additionally writes the licensee ID, the model ID, the certificate ID and the server ID to be revoked, which are received by the input unit 150, to the revocation file, and re-signs the revocation file.

The revocation file storage unit 152 stores therein the revocation file re-signed by the signing unit 151. When the copy system is set up for the first time, the signed revocation file has been stored in the revocation file storage unit 152.

The revocation file transmission unit 153 transmits the revocation file stored in the revocation file storage unit 152 to the content production apparatus 300.

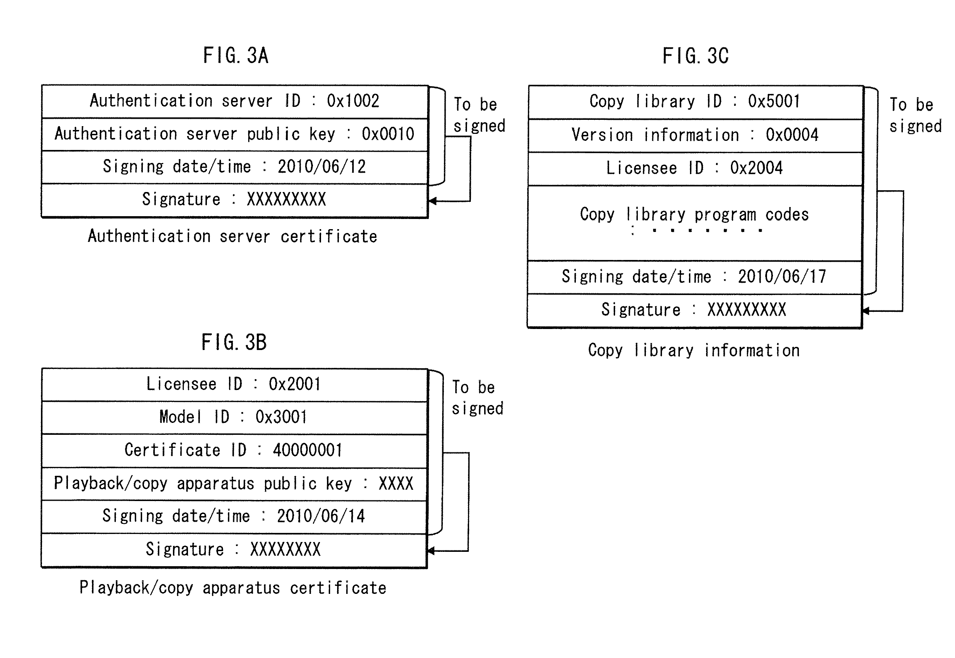

FIG. 3A shows an example of the structure of the authentication server certificate generated by the certificate generation unit 121 in the key issuing authority 100. FIG. 3B shows an example of the structure of the playback/copy apparatus certificate generated by the certificate generation unit 131 in the key issuing authority 100. FIG. 3C shows the example of the structure of the copy library information signed by the signing unit 141 in the key issuing authority 100.

Referring to FIG. 3A, the authentication server certificate includes the authentication server ID, the authentication server public key, the signing date/time, and the signature.

Referring to FIG. 3B, the playback/copy apparatus certificate includes the licensee ID, the model ID, the certificate ID, the playback/copy apparatus public key, the signing date/time, and the signature.

Referring to FIG. 3C, the copy library information includes the copy library ID, the version information, the licensee ID, copy library program codes, the signing date/time, and the signature. Use of the signature has an effect of protecting the playback/copy apparatus, because signature verification is performed before the playback/copy apparatus 500 uses the copy library to prevent the copy library from operating when any tampering is detected. Note that, instead of attaching the signature, the playback/copy apparatus may be protected by encrypting a part of the information to be signed. When encryption is performed instead of attaching the signature, the copy library is not used without an encryption key. Therefore, the copy library is used only by the playback/copy apparatus having the encryption key, and thus an effect of preventing an unauthorized use of the copy library is obtained. Note that both of the signing and the encryption may be used.

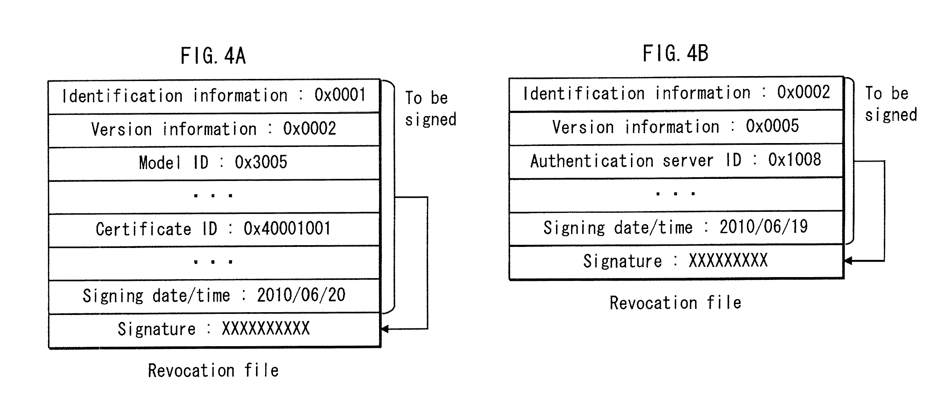

FIG. 4A shows a revocation file to revoke a specific playback/copy apparatus 500. FIG. 4B shows another revocation file to revoke a specific authentication server.

Referring to FIG. 4A, the revocation file includes identification information, the version information, the model ID, the certificate ID, the signing date/time, and the signature.

Referring to FIG. 4B, the revocation file includes the identification information, the version information, the authentication server ID, the signing date/time, and the signature.

### <Key Issuing Flow of Key Issuing Authority 100>

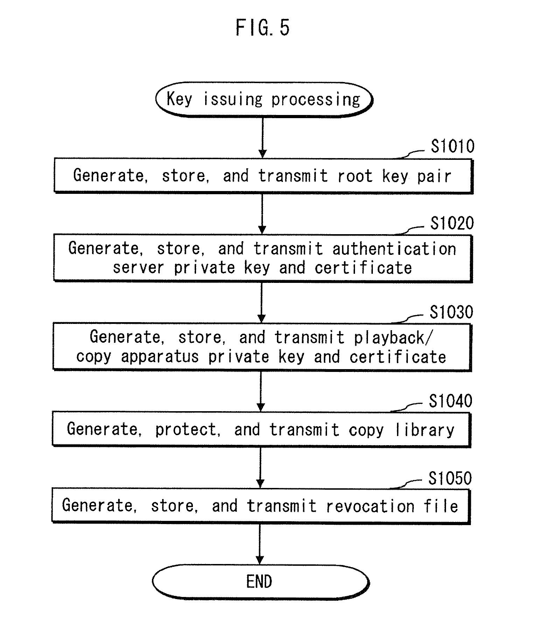

FIG. 5 shows a key issuing flow of the key issuing authority 100.

The root key pair generation unit 110 generates the root key pair consisting of the root public key and the root private key. The root key pair storage unit 111 stores therein the key pair consisting of the root public key and the root private key. Upon request, the root public key transmission unit 112 transmits the root public key to the authentication server 200 and the playback/copy apparatus 500 (S1010).

The authentication server key pair generation unit 120 generates a key pair consisting of an authentication server public key and an authentication server private key. The certificate generation unit 121 generates the authentication server certificate from the authentication server public key, and attaches the signature to the generated authentication server certificate. The authentication server private key and certificate storage unit 122 stores therein the authentication server private key and the authentication server certificate. The authentication server private key and certificate transmission unit 123 transmits, to the authentication server 200, the authentication server private key and the authentication server certificate (S1020).

The playback/copy apparatus key pair generation unit 130 generates a key pair consisting of a playback/copy apparatus public key and a playback/copy apparatus private key. The certificate generation unit 131 generates the playback/copy apparatus certificate from the playback/copy apparatus public key, and attaches the signature to the generated playback/copy apparatus certificate. The playback/copy apparatus private key and certificate storage unit 132 stores therein the playback/copy apparatus private key and the playback/copy apparatus certificate. The playback/copy apparatus private key and certificate transmission unit 133 transmits, to the playback/copy apparatus 500, the playback/copy apparatus private key and the playback/copy apparatus certificate (S1030).

The copy library generation unit 140 generates the copy library.

The signing unit 141 attaches a signature to copy library information. The copy library information is generated by adding the copy library ID, the version information, the licensee ID, and the signing date/time to the copy library generated by the copy library generation unit 140. The copy library transmission unit 142 transmits the copy library information to the content production apparatus 300 (S1040).

The input unit 150 receives, as inputs, the licensee ID, the model ID, the certificate ID and the server ID to be revoked. The signing unit 151 adds the identification information, the version information, the model ID, the certificate ID, the authentication server ID, and the signing date/time to the licensee ID, the model ID, the certificate ID and the server ID to be revoked. The signing unit 151 then attaches the signature to these pieces of information using the root private key stored in the root key pair storage unit 111. The revocation file storage unit 152 stores therein the signed revocation file. The revocation file transmission unit 153 transmits the revocation file to the authentication server 200 and the content production apparatus 300 (S1050).

Note that the revocation file transmitted to the content production apparatus 300 is recorded on the first recording medium apparatus 400 and used by the playback/copy apparatus 500. In place of being transmitted to the content production apparatus 300 and recorded on the first recording medium apparatus 400, the revocation file may be directly transmitted to the playback/copy apparatus 500, or may be embedded in advance in the playback/copy apparatus 500 during manufacturing of the playback/copy apparatus 500.

### <Detailed Structure of Authentication Server 200>

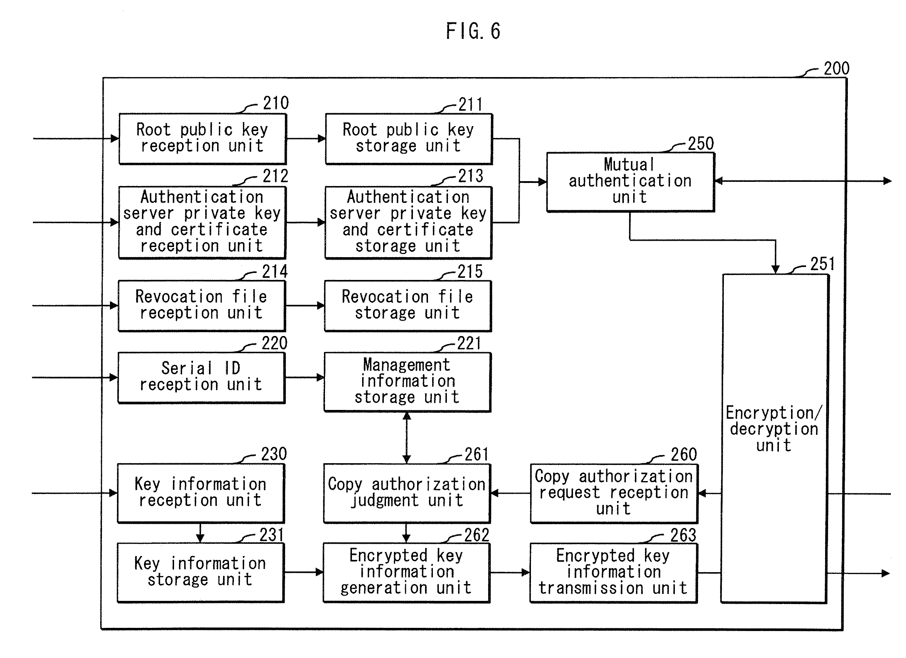

FIG. 6 shows a detailed structure of the authentication server 200.

As shown in FIG. 6, the authentication server 200 includes a root public key reception unit 210, a root public key storage unit 211, an authentication server private key and certificate reception unit 212, an authentication server private key and certificate storage unit 213, a revocation file reception unit 214, a revocation file storage unit 215, a serial ID reception unit 220, a management information storage unit 221, a key information reception unit 230, a key information storage unit 231, a mutual authentication unit 250, an encryption/decryption unit 251, a copy authorization request reception unit 260, a copy authorization judgment unit 261, an encrypted key information generation unit 262, and an encrypted key information transmission unit 263.

The root public key reception unit 210 receives the root public key from the key issuing authority 100.

The root public key storage unit 211 stores therein the root public key received by the root public key reception unit 210.

The authentication server private key and certificate reception unit 212 receives the authentication server private key and the authentication server certificate from the key issuing authority 100.

The authentication server private key and certificate storage unit 213 stores therein the authentication server private key and the authentication server certificate received by the authentication server private key and certificate reception unit 212.

The revocation file reception unit 214 receives the revocation file transmitted from the key issuing authority 100.

The revocation file storage unit 215 stores therein the revocation file received by the revocation file reception unit 214.

Upon receiving serial ID registration information from the content production apparatus 300, the serial ID reception unit 220 stores the received serial ID registration information in the management information storage unit 221.

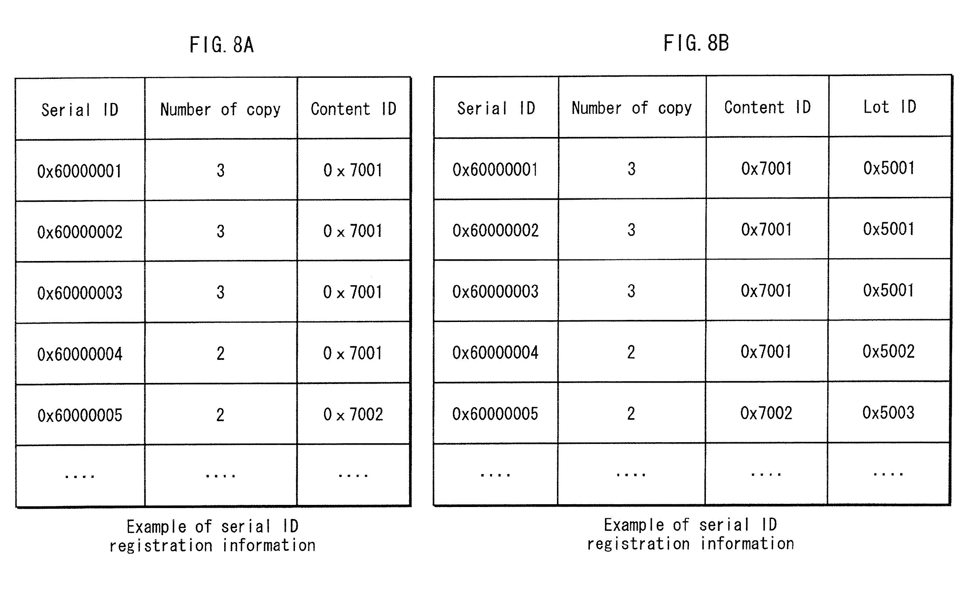

FIGs. 8A and 8B show examples of the serial ID registration information.

FIG. 8A shows an example of the serial ID registration information, which is a list including one or more sets of the serial ID, the number of copy, and the content ID.

The serial ID is a number used for granting rights to copy the copy data, authorizing the copying, confirming a status of the rights, and so on. The serial IDs are basically provided in one-to-one correspondence with pieces of the copy data. Each serial ID has a unique value so that different pieces of copy data are distinguished from one another. There are two methods, for example, for providing the serial ID to the corresponding copy data. One is a method in which the number used for identifying an optical medium, such as a Blu-ray ROM disc, having recorded thereon the copy data is used as the serial ID. An example of the number used for identifying an optical medium is the pre-recorded media serial number (PMSN, defined by the Blu-ray ROM Disc Association for identifying a Blu-ray ROM disc). The PMSN is written to a burst cutting area (BCA) on a Blu-ray ROM disc. The other is a method in which, when packages of optical media such as Blu-ray ROM discs are distributed and sold, the number is printed on an insert included in each package. Here, the serial ID printed on the insert included in each package is referred to as a sticker ID.

By using the number for identifying the optical medium such as PMSN, and the sticker ID printed on an insert included in each package as the serial ID, and by registering the serial ID to the authentication server 200, the optical medium and the copy data recorded on the optical medium are paired up with each other.

The number of copy included in the serial ID registration information indicates the maximum number of times that the copying of the copy data identified by the serial ID is allowed. For example, a right to copy data three times is granted to the copy data identified by the serial ID 0x60000001 in FIG. 8A.

The content ID included in the serial ID registration information is information for identifying types of the copy data. It is not necessary to record a different piece of copy data on each optical medium. The same copy data may be recorded on different optical media. For example, when a trailer for a movie to be released next season is used as the copy data, the promotional copy data may be recorded on a plurality of different titles released this season as a bonus. Since the content ID shows a type of the copy data, registration of the same content is simplified when the key registration information is registered, as described later.

FIG. 8B shows another example of the serial ID registration information, which is a list including one or more sets of the serial ID, the number of copy, the content ID, and the lot ID.

When read-only discs such as Blu-ray ROM discs (for which writing, overwriting and deleting of data are not allowed unlike rewritable discs) are to be manufactured and shipped in large quantity, in order to improve manufacturing efficiency and reduce manufacturing costs, an original disc image is produced first, and then the produced original disc image is efficiently copied onto millions to tens of millions of discs. This enables mass production. Therefore, the same data is written to discs manufactured in the same manufacturing unit (lot). Information for identifying the corresponding lot is referred to as a lot ID, and embedded in the disc image. One example of the lot ID is a Volume ID. The Volume ID is information used in the Blu-ray ROM disc. The Volume ID is securely embedded in the disc image, and therefore is highly reliable as information for identifying a lot. In order to record the PMSN on the BCA as described above, a step of writing identification information to each optical medium is required, after optical media are manufactured using the disc image. Use of the PMSN is less likely to become widespread from a business standpoint, because it requires costs. However, the PMSN is securely recorded on an optical medium, and thus is highly reliable compared with the sticker ID. This completes the description of FIGs. 8A and 8B.

Next, the management information storage unit 221 stores therein the serial ID registration information.

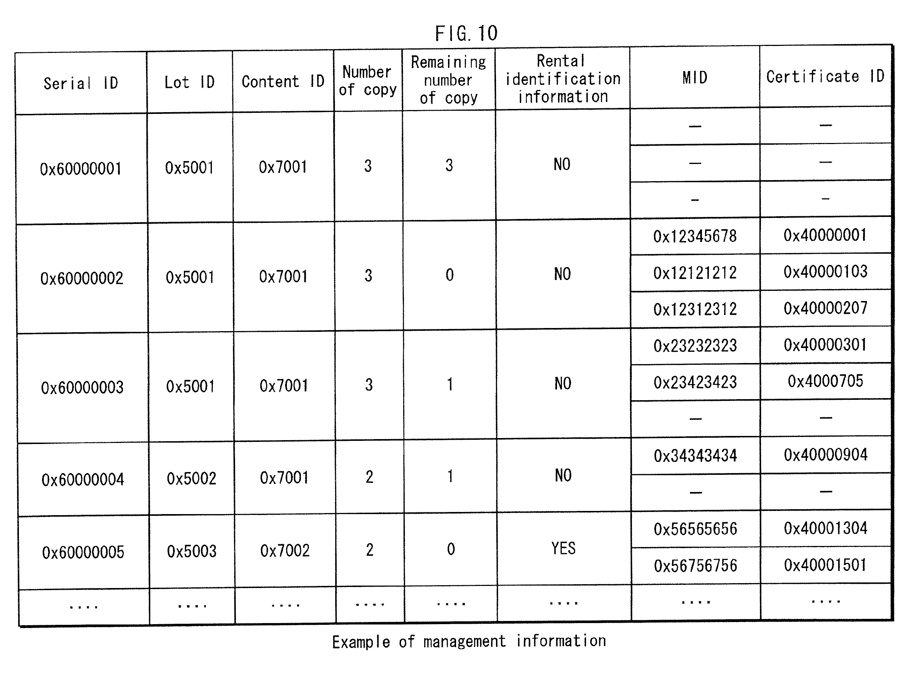

FIG. 10 shows an example of the serial ID registration information (management information) stored in the management information storage unit 221.

The management information is a list including one or more sets of the serial ID, the lot ID, the content ID, the number of copy, the remaining number of copy, rental identification information, an MID (Media ID: media identification information), and a playback/copy apparatus certificate ID. The serial ID, the lot ID, the content ID, and the number of copy are included in the serial ID registration information. Entries of these pieces of information are added to the management information via the serial ID reception unit 220, or updated. Basically, the remaining number of copy, the MID, and the certificate ID are additionally written to the management information or updated upon receiving the copy authorization request from the playback/copy apparatus 500. Although not shown in FIGs. 8A to 9, a flag showing a rental and so on may be added to the serial ID registration information or the key registration information. This makes it possible to distinguish whether the serial ID assigned in units of areas of the serial ID, the Volume IDs, or the content IDs is for rental use, for retail use, or for another use.

The following describes the management information shown in FIG. 10 by using the serial ID 0x60000003 as an example. The "Lot ID" column contains the value "0x5001", the "Content ID" column contains the value "0x7001", and the "Number of copy" column contains the value "3 (up to three times)". However, copying has already been authorized twice, and thus the "Remaining number of copy" column contains the value "1 ". The "Rental identification information" column contains the value "NO", meaning that the copy data corresponding to this serial ID is not recorded on rental optical media. In each of the "MID" and "Certificate ID" columns, two out of three lines are filled. The two lines in the "MID" column show the MIDs of the second recording medium apparatuses 600 to which data has been written as a result of performing authorization twice. The two lines in the "Certificate ID" column show two certificate IDs recorded in the playback/copy apparatus certificate of the playback/copy apparatus 500 that has copied the data. This completes the description of FIG. 10.

Next, the key information reception unit 230 receives key registration information from the content production apparatus 300.

The key information storage unit 231 stores therein the key registration information received by the key information reception unit 230.

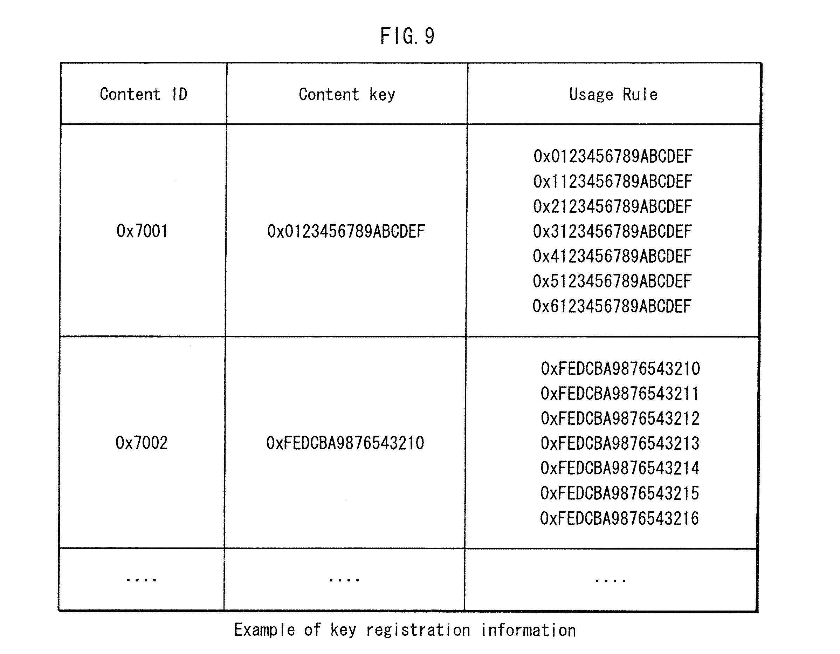

FIG. 9 shows an example of the key registration information.

The key registration information is a list including one or more sets of the content ID, the content key, and the Usage Rule.

The content ID included in the key registration information is information for identifying types of the copy data. The copy data may be used for a different optical medium or a different lot. In this case, by adding, to the serial ID registration information, the content key having encrypted the copy data and the Usage Rule specifying constraints on the copied data, the different optical medium and the different lot are registered individually. Here, registration operation for the key registration information is unnecessary. By adding the registration operation for the key registration information, the content key and the Usage Rule only have to be registered once in units of content IDs. Furthermore, adding the registration operation for the key registration information reduces the frequency of handling of data that might be abused or illegally copied once being leaked. In addition, the management of such data is facilitated, and the manufacturing costs of the optical media are reduced as a whole. In FIG. 9, a content key of 8 bytes is taken as an example.

An example of the copy data is SD-Video data recorded on an SD card. Note that the specification of the SD-Video is defined by the SDA. CPRM, which is the specification for copyright protection of the SD-Video is defined by 4C Entity. The SD-Video data using CPRM is protected by using the content key of 8 bytes.

By way of example, Usage Rule is shown as data of 56 bytes in FIG. 9. Note that the size of Usage Rule defined by CPRM as the specification for copyright protection of the SD-Video is 56 bytes. This completes the description of FIG. 9.

The mutual authentication unit 250 performs host/server mutual authentication with the playback/copy apparatus 500, and shares a common key with the playback/copy apparatus 500.

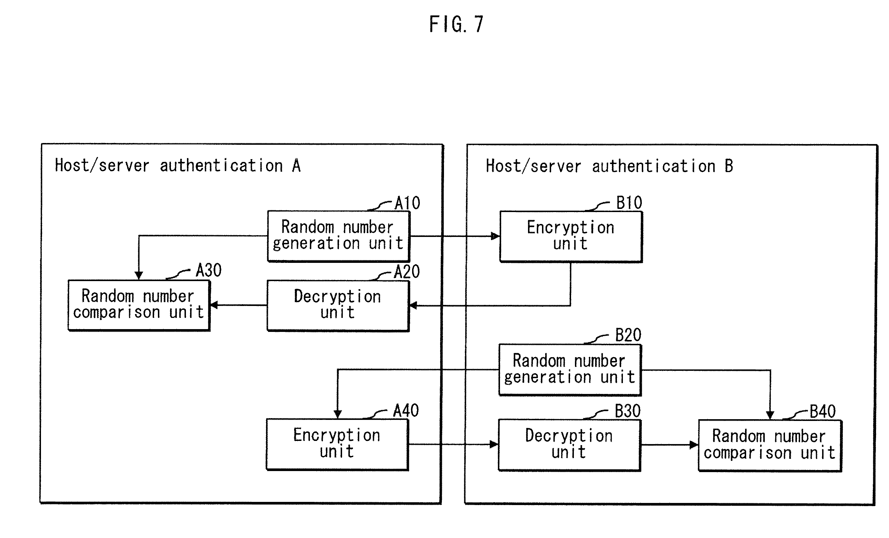

FIG. 7 shows a procedure of the host/server mutual authentication. For example, this procedure is conducted in the following manner.

(a) A random number generation unit A10 in a host/server authentication A generates a random number R1, and transmits the generated random number R1 to a host/server authentication B.

(b) An encryption unit B10 in the host/server authentication B encrypts the random number R1 with a unique key Ksc to generate E (Ksc, R1), and transmits the encrypted random number E (Ksc, R1) to the host/server authentication A.

(c) A decryption unit A20 in the host/server authentication A decrypts the received E (Ksc, R1) with the unique key Ksc to generate D (Ksc, E (Ksc, R1)) (= R1).

(d) A random number comparison unit A30 in the host/server authentication A authenticates a module when a result of the decryption in (c) and the random number generated in (a) match.

(e) A random number generation unit B20 in the host/server authentication B generates a random number R2, and transmits the generated random number R2 to the host/media authentication A.

(f) An encryption unit A40 in the host/server authentication A encrypts the random number R2 with the unique key Ksc to generate E (Ksc, R2), and transmits the encrypted random number E (Ksc, R2) to the host/server authentication B.

(g) A decryption unit B30 in the host/server authentication B decrypts the received E (Ksc, R2) with the unique key Ksc to generate D (Ksc, E (Ksc, R2)) (= R2).

(h) A random number comparison unit B40 in the host/server authentication B authenticates a module when a result of the decryption in (g) and the random number generated in (e) match. Here, both the host/server authentication A and the host/media authentication B use a value obtained by applying R1||R2 to a one-way function using the Ksc as a shared key.

Note that the mutual authentication procedures described here are just examples, and mutual authentication may be performed by using the other methods.

The mutual authentication unit 250 judges whether the licensee ID, the model ID, or the certificate ID of the playback/copy apparatus 500 specified during the mutual authentication matches information included in the revocation file stored in the revocation file storage unit 215. When they match, the mutual authentication unit 250 judges that the playback/copy apparatus 500 currently to be communicated is an inauthentic apparatus, and further communication and processing may be stopped.

The encryption/decryption unit 251 protects data on a transmission line by encrypting data transmitted from the authentication server 200 to the playback/copy apparatus 500 with the common key shared by the mutual authentication unit 250 and the playback/copy apparatus 500, and by decrypting data transmitted from the playback/copy apparatus 500 to the authentication server 200 with the common key.

The copy authorization request reception unit 260 receives the copy authorization request from the playback/copy apparatus 500.

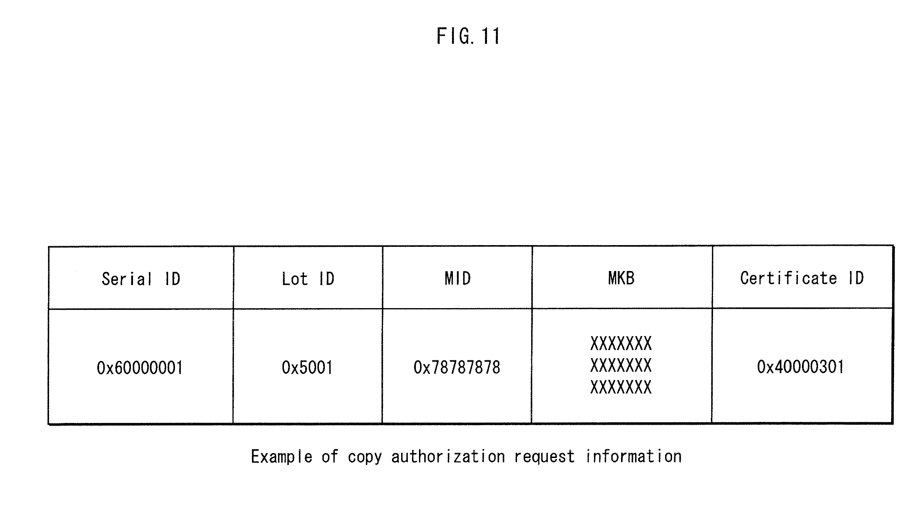

FIG. 11 shows an example the copy authorization request information.

The copy authorization request information includes the serial ID, the lot ID, the MID, the media key block (MKB), and the certificate ID. The MKB is data to calculate the content key. The method for decrypting the content key may vary according to the playback apparatus. By using the MKB, it becomes possible to perform special revoking processing such that playback of a card having a special MID is prevented. In the CPRM as the specification for copyright protection, the MKB is defined as a file. The "Serial ID" column in the copy authorization request information shown in FIG. 11 contains the value "0x60000001".

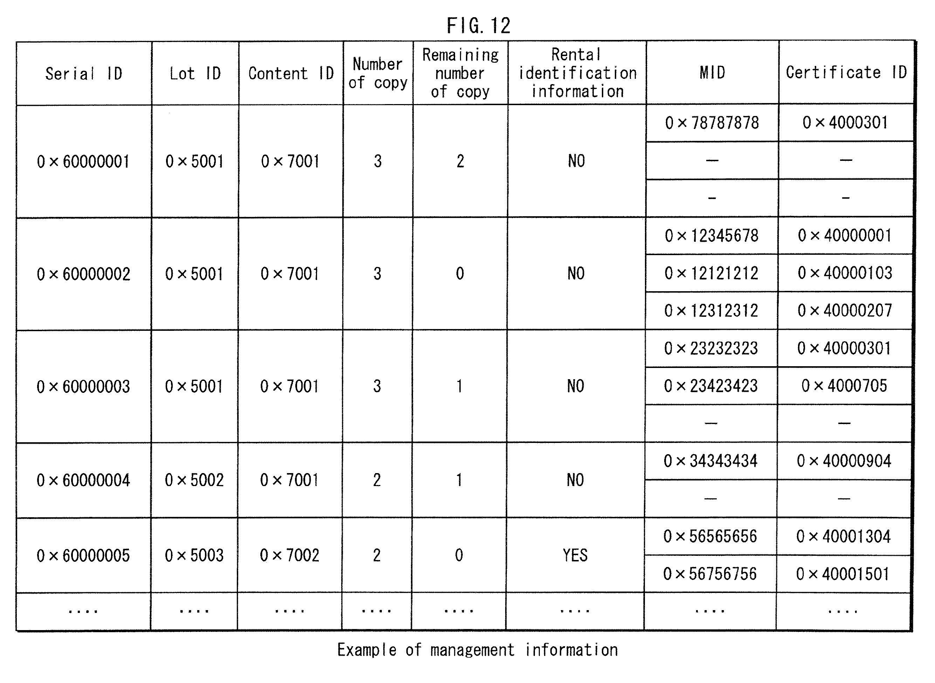

FIG. 12 shows updated management information, which is obtained by updating the management information shown in FIG. 10 after the reception of the copy authorization request information. The "Remaining number of copy" column corresponding to the serial ID 0x60000001 contains the value "3" in the management information shown in FIG. 10. The "Remaining number of copy" column is updated, and contains the value "2" after the reception of the copy authorization request shown in FIG. 11. In FIG. 10, three lines in each of the "MID" and "Certificate ID" columns corresponding to the serial ID 0x60000001 are empty. In FIG. 12, the MID and the certificate ID included in FIG. 11 are additionally written.

In the present embodiment, sizes of the content ID, the content key, and the Usage Rule are respectively 2, 8, and 56 bytes, and sizes of the lot ID, the MID, and the certificate ID are respectively 2, 4, and 4 bytes. The sizes of these pieces of information, however, are not limited to the above, and may have other values.

When the copy authorization request reception unit 260 receives the copy authorization request, the copy authorization judgment unit 261 acquires management information stored in the management information storage unit 221, and judges whether the serial ID and the lot ID included in the copy authorization request are included in the management information.
(1) When judging that the serial ID and the lot ID are not included in the management information, the copy authorization judgment unit 261 notifies, via the copy authorization request reception unit 260, the playback/copy apparatus 500 that the copying is not authorized.
(2) When judging that the serial ID and the lot ID are included in the management information, the copy authorization judgment unit 261 checks whether the number of times that the copying is allowed (the remaining number of copy) is "1" or more.
(2-1) When the number of times that the copying is allowed is "1" or more, the copy authorization judgment unit 261 instructs the encrypted key information generation unit 262 to generate the encryption key.
(2-2) When the number of times that the copying is allowed is "0", the copy authorization judgment unit 261 checks whether a corresponding serial ID indicates that the rental is possible.
(2-2-1) When the corresponding serial ID indicates that the rental is possible, the copy authorization judgment unit 261 notifies, via the copy authorization request reception unit 260, the playback/copy apparatus 500 that the copying is not allowed but purchase is possible.
(2-2-2) When the corresponding serial ID indicates that the rental is not possible, the copy authorization judgment unit 261 checks whether an MID included in the copy authorization request matches an MID corresponding to the serial ID copying of which has been allowed.
(2-2-2-1) When they match, the copy authorization judgment unit 261 instructs the encrypted key information generation unit 262 to generate the encryption key.
(2-2-2-2) When they do not match, the copy authorization judgment unit 261 notifies, via the copy authorization request reception unit 260, the playback/copy apparatus 500 that the copying is not allowed but purchase is possible.

The encrypted key information generation unit 262 acquires the management information stored in the management information storage unit 221, and then specifies the corresponding content ID from the serial ID and the lot ID included in the copy authorization request information. By using the specified content ID, the encrypted key information generation unit 262 checks the key registration information stored in the key information storage unit 231, and acquires the corresponding content key and a Usage Rule. By using an MID and an MKB included in the copy authorization request information, the encrypted key information generation unit 262 further generates a media unique key. The encrypted key information generation unit 262 then generates encrypted key information including an encryption key and an encrypted Usage Rule by encrypting the acquired content key and Usage Rule.

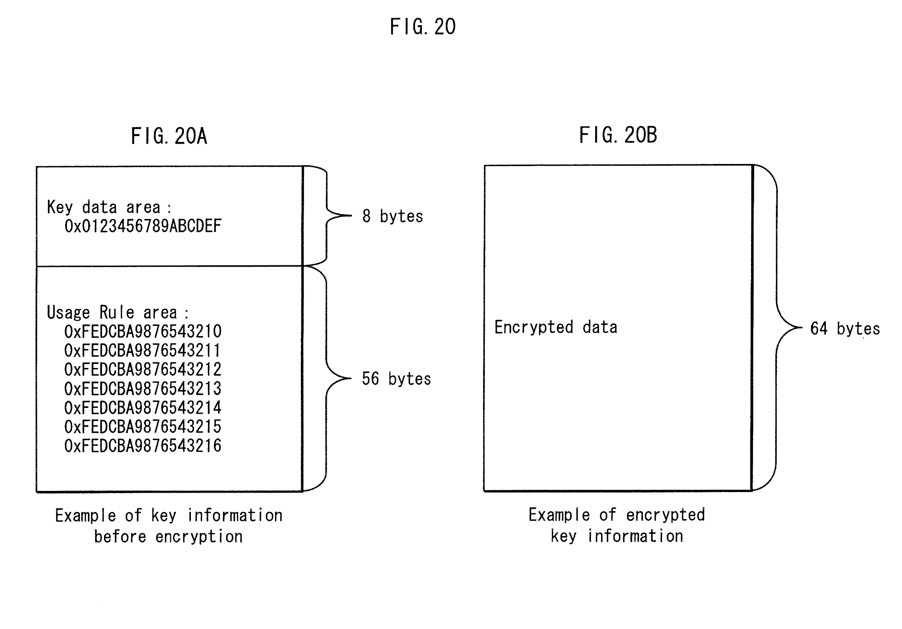

FIGs. 20A and 20B show examples of key information.

FIG. 20A shows the key information before encryption. The key information before encryption includes a key data area and a Usage Rule area.

FIG. 20B shows the key information after encryption. Since the key data area and the Usage Rule area have been encrypted, the key data area and the Usage Rule area are not distinguished from each other by appearance.

The encrypted key information transmission unit 263 transmits the encrypted key information generated by the encrypted key information generation unit 262 to the playback/copy apparatus 500.

### <Authentication Flow of Authentication Server 200>

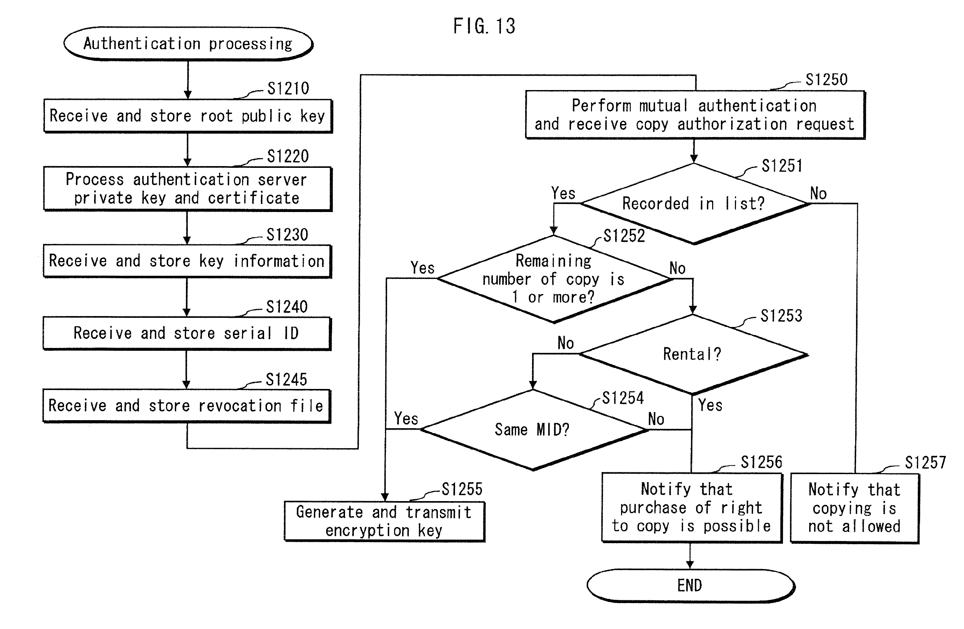

FIG. 13 shows an authentication flow of the authentication server 200.

Upon receiving the root public key from the key issuing authority 100, the root public key reception unit 210 stores the received root public key in the root public key storage unit 211 (S1210).

Upon receiving the authentication server private key and the authentication server certificate from the key issuing authority 100, the authentication server private key and certificate reception unit 212 securely stores the received authentication server private key and authentication server certificate in the authentication server private key and certificate storage unit 213 (S1220).

Upon receiving key registration information from the content production apparatus 300, the key information reception unit 230 stores the received key registration information in the key information storage unit 231 (S1230).

Upon receiving serial ID registration information from the content production apparatus 300, the serial ID reception unit 220 updates the management information, and then stores the updated management information in the management information storage unit 221 (S1240).

Upon receiving the revocation file from the key issuing authority 100, the revocation file reception unit 214 compares a version of the received revocation file with a version of the revocation file stored in the revocation file storage unit 215. When the received revocation file is updated, the revocation file stored in the revocation file storage unit 215 is replaced by the received revocation file (S1245).

Upon receiving a request from the playback/copy apparatus 500, the mutual authentication unit 250 performs mutual authentication with the playback/copy apparatus 500. The mutual authentication processing is performed in the procedures shown in FIG. 7. The playback/copy apparatus certificate is transmitted from the playback/copy apparatus 500 to the authentication server 200. The authentication server certificate is transmitted from the authentication server 200 to the playback/copy apparatus 500. The mutual authentication unit 250 compares the certificate ID in the playback/copy apparatus certificate of the playback/copy apparatus 500 with information in the revocation list. When they match, the mutual authentication unit 250 notifies the playback/copy apparatus 500 that the content ID is invalid. When they do not match, the mutual authentication unit 250 securely shares the common key with the playback/copy apparatus 500, and proceeds to perform the processing in step S1251 onward (S 1250).

The copy authorization request reception unit 260 receives the copy authorization request from the playback/copy apparatus 500. In the processing in step S1250, when data is to be transmitted to the playback/copy apparatus 500, the encryption/decryption unit 251 encrypts the data with the common key shared by the playback/copy apparatus 500 and the mutual authentication unit 250. On the other hand, when data is received from the playback/copy apparatus 500, the encryption/decryption unit 251 decrypts the received data with the common key. The copy authorization judgment unit 261 checks whether the entry corresponding to the serial ID in the received copy authorization request is recorded on the management information stored in the management information storage unit 221. When it is recorded, processing proceeds to step S1252. When it is not recorded, processing proceeds to step S1257(S1251).

The copy authorization judgment unit 261 checks the remaining number of copy of the entry corresponding to the serial ID (in FIG. 11, 0x60000001) designated by the received copy authorization request, which is recorded in the management information. When the remaining number of copy is one or more, processing proceeds to step S1255. When the remaining number of copy is zero, processing proceeds to step S1253 (S 1252).

The copy authorization judgment unit 261 checks the rental status of the entry corresponding to the serial ID (in FIG. 11, 0x60000001) designated by the received copy authorization request, which is recorded in the management information. When the rental status indicates "Yes", processing proceeds to step S1256. When the rental status indicates "No", processing proceeds to step S1254 (S1253).

The copy authorization judgment unit 261 checks whether the MID in the copy authorization request (in FIG. 11, 0x78787878) matches MID(s) having been authorized to be copied in the entry corresponding to the serial ID (in FIG. 11, 0x60000001) designated by the received copy authorization request, which is recorded in the management information. When they match, processing proceeds to step S1255. When they do not match, processing proceeds to step S1256 (S1254).

The copy authorization judgment unit 261 requests the encrypted key information generation unit 262 to generate the encrypted key information. The encrypted key information generation unit 262 searches the entry of the key registration information stored in the key information storage unit 231 that includes the content ID matching the content ID (in FIG. 10, 0x7001) in the entry corresponding to the serial ID (in FIG. 11, 0x60000001) in the copy authorization request, which is recorded on the management information, to specify the content key. When the content ID in FIG. 10 is specified from the copy authorization request in FIG. 11, the content key indicated by 0x0123456789ABCDEF is specified in the key registration information in FIG. 9. The encrypted key information generation unit 262 generates the encryption key by encrypting the content key using the MID and the MKB in the copy authorization request. The encrypted key information generation unit 262 also encrypts the Usage Rule corresponding to the encrypted content key using the MID and the MKB to generate encrypted key information including the encryption key and the encrypted Usage Rule. The encrypted key information transmission unit 263 transmits the encrypted key information to the playback/copy apparatus 500 via the encryption/decryption unit 251 (S1255).

The copy authorization judgment unit 261 notifies, via the copy authorization request reception unit 260, the playback/copy apparatus 500 that, as for the received serial ID, the copying is not allowed but purchase is possible (S1256).

The copy authorization judgment unit 261 notifies, via the copy authorization request reception unit 260, the playback/copy apparatus 500 that the received serial ID is not registered, and the copying is not allowed (S1257).

### <Detailed Structure of Content Production Apparatus 300>

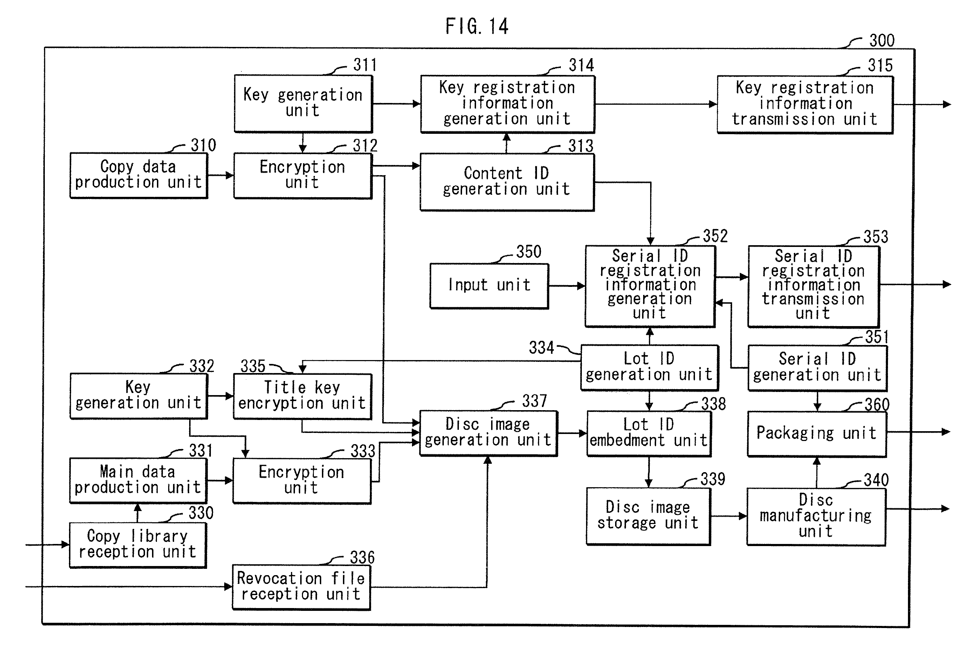

FIG. 14 shows a detailed structure of the content production apparatus 300.

As shown in FIG. 14, the content production apparatus 300 includes a copy data production unit 310, a key generation unit 311, an encryption unit 312, a content ID generation unit 313, a key registration information generation unit 314, a key registration information transmission unit 315, a copy library reception unit 330, a main data production unit 331, a key generation unit 332, an encryption unit 333, a lot ID generation unit 334, a title key encryption unit 335, a revocation file reception unit 336, a disc image generation unit 337, a lot ID embedment unit 338, a disc image storage unit 339, a disc manufacturing unit 340, an input unit 350, a serial ID generation unit 351, a serial ID registration information generation unit 352, a serial ID registration information transmission unit 353, and a packaging unit 360.

The copy data production unit 310 produces copy data (e.g. SD-Video application data before being encrypted) to be copied from an optical medium onto the second recording medium apparatus (e.g. an SD-Card) by the playback/copy apparatus 500 by recording the data on an optical medium.

The key generation unit 311 generates the content key for encrypting the copy data. When the copy data is the SD-Video application, for example, it is required that the method of copyright protection be the CPRM and the content key be a random number of 56 bits.

The encryption unit 312 encrypts the copy data generated by the copy data production unit 310 with the content key generated by the key generation unit 311.

The content ID generation unit 313 generates the content ID for identifying the encrypted copy data. The content ID may be generated by using a random number, by specifying given values in order, by using a hash value obtained from the copy data, or by converting the hash value obtained from the copy data with use of a certain function.

The key registration information generation unit 314 generates the key registration information using the content key generated by the key generation unit 311 and the content ID generated by the content ID generation unit 313. An example of the key registration information is shown in FIG. 9. It is assumed that the Usage Rule is generated by the key generation unit 311.

The key registration information transmission unit 315 transmits the key registration information generated by the key registration information generation unit 314 to the authentication server 200.

The copy library reception unit 330 receives the copy library transmitted from the key issuing authority 100.

The main data production unit 331 produces the authentic application data to be recorded on the optical medium. For example, when the optical medium is a Blu-ray ROM disc, the main data production unit 331 produces a Blu-ray disc movie (BDMV) application. The BDMV application includes, in addition to video data and audio data, a high-definition movie (HDMV) application and a Blu-ray disc Java™ (BDJ) application for achieving the interactive function, and changes a user interface (UI) and operations via user's interactive operation. Also, the BDJ application enables data communication with the internet world.

The key generation unit 332 generates the title key for encrypting the video data and the audio data included in the authentic application data to be recorded on the optical medium. When the optical medium is a Blu-ray ROM disc, it is required that the specification for copyright protection be the advanced access content system (AACS), and the title key be of 128 bits.

The encryption unit 333 encrypts the video data and the audio data included in the application data produced by the main data production unit 331 with the title key generated by the key generation unit 332.

The lot ID generation unit 334 generates the lot ID, which is identification information used in units of lots. Note that, when the optical medium is the Blu-ray ROM disc, the Volume ID corresponds to the lot ID. The Volume ID is used for protecting the title key.

The title key encryption unit 335 encrypts the title key for protection. When the optical medium is the Blu-ray ROM disc, the title key is encrypted with the volume unique key generated by using the Volume ID and the MKB.

The revocation file reception unit 336 receives the revocation file transmitted from the key issuing authority 100.

The disc image generation unit 337 generates a disc image by combining the copy data encrypted by the encryption unit 312, the main data generated by the encryption unit 333 through encryption, the encryption key generated by the title key encryption unit 335 through encryption, and the revocation file received by the revocation file reception unit 336.

The lot ID embedment unit 338 embeds the lot ID in the disc image generated by the disc image generation unit 337. For example, the lot ID may be embedded in the disc image by adding a file to which the lot ID is written to the disc image. Alternatively, the lot ID may be embedded in the disc image by recording the lot ID in advance in such a manner that the lot ID cannot be read by an API or an interface of a normal file system, but can be read only by a special module. In this case, the lot ID can be received only when the authentication with the special module is successful. The above technology indicates the ROM Mark technology used on the Blu-ray ROM disc.

The disc image storage unit 339 stores therein the disc image in which the lot ID has been embedded by the lot ID embedment unit 338.

The disc manufacturing unit 340 manufactures the optical media using the disc image stored in the disc image storage unit 339.

A user inputs the number of copy to the input unit 350.

The serial ID generation unit 351 generates the serial ID.

The serial ID registration information generation unit 352 generates the serial ID registration information by combining the serial ID generated by the serial ID generation unit 351, the lot ID generated by the lot ID generation unit 334, the number of copy input to the input unit 350, and the content ID generated by the content ID generation unit 313.

The serial ID registration information transmission unit 353 transmits the serial ID registration information generated by the serial ID registration information generation unit 352 to the authentication server 200.

The packaging unit 360 assigns each optical medium with a corresponding serial ID by recording the serial ID (PMSN) generated by the serial ID generation unit 351 on a special area on an optical disc manufactured by the disc manufacturing unit 340, or by including an insert with the serial ID (sticker ID) generated by the serial ID generation unit 351 printed thereon in a package of an optical disc manufactured by the disc manufacturing unit 340 during a packaging process. This completes the packaging of each optical medium.

### <Production Flow of Content Production Apparatus 300>

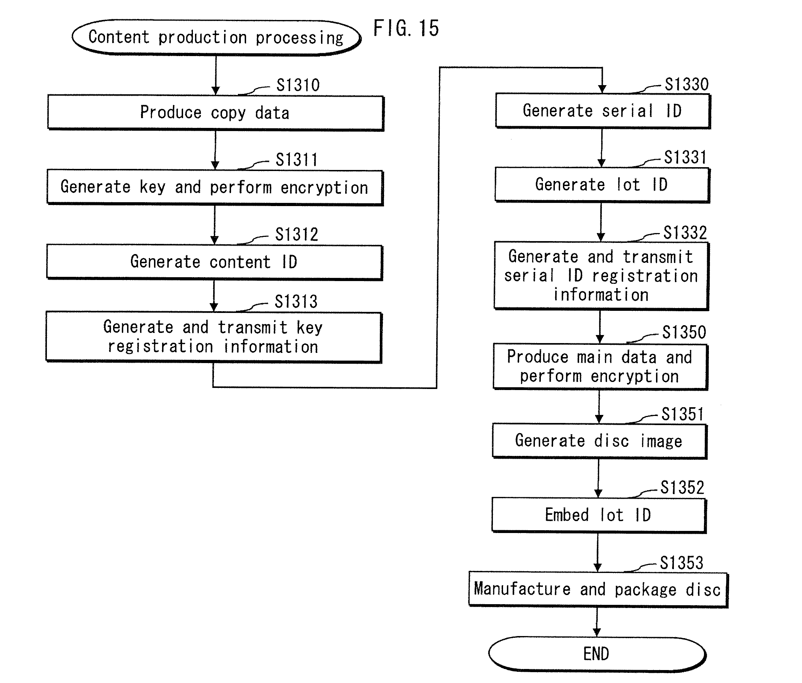

FIG. 15 shows a production flow of the content production apparatus 300.

The copy data production unit 310 produces the copy data before being encrypted (S 1310).

The key generation unit 311 generates the content key for encrypting the copy data. The encryption unit 312 encrypts the copy data with the generated content key (S1311).

The content ID generation unit 313 generates the content ID (S1312).

The key registration information generation unit 314 generates the key registration information by combining the content ID generated by the content ID generation unit 313 and the content key generated by the key generation unit 311. The key generation unit 311 may generate the Usage Rule and add the generated Usage Rule to the key registration information (S1333).

The serial ID generation unit 351 generates the serial ID (S1330).

The lot ID generation unit 334 generates the lot ID (S1331).

The serial ID registration information is generated by combining the serial ID generated by the serial ID generation unit 351, the lot ID generated by the lot ID generation unit 334, the number of copy input to the input unit 350, and the content ID generated by the content ID generation unit 313 (S 1332).

The copy library reception unit 330 receives the copy library transmitted from the key issuing authority 100. The main data production unit 331 produces the authentic application data to be recorded on the optical medium. The copy library is incorporated as a part of the interactive function. The key generation unit 332 generates the title key for encrypting the video data and the audio data included in the authentic application data to be recorded on the optical medium. When the optical medium is the Blu-ray ROM disc, for example, it is required that the specification for copyright protection be AACS and the title key be a title key of 128 bits. The encryption unit 333 encrypts the video data and the audio data included in the application data produced by the main data production unit 331 with the title key generated by the key generation unit 332 (S1350).

The title key encryption unit 335 encrypts the title key for protection. When the optical medium is the Blu-ray ROM disc, the title key is encrypted with the volume unique key generated by using the Volume ID and the MKB. The revocation file reception unit 336 receives the revocation file transmitted from the key issuing authority 100. The disc image generation unit 337 generates a disc image by combining the copy data encrypted by the encryption unit 312, the main data generated by the encryption unit 333 through encryption, the encryption key generated by the title key encryption unit 335 through encryption, and the revocation file received by the revocation file reception unit 336 (S1351).

The lot ID embedment unit 338 embeds the lot ID in the disc image generated by the disc image generation unit 337. For example, the lot ID may be embedded in the disc image by adding a file to which the lot ID is written to the disc image. Alternatively, the lot ID may be embedded in the disc image by recording the lot ID in advance in such a manner that the lot ID cannot be read by an API or an interface of a normal file system, but can be read only by a special module. In this case, the lot ID can be received only when the authentication with the special module is successful. The above technology indicates the ROM Mark technology used on the Blu-ray ROM disc (S 1352).

The disc image storage unit 339 stores therein the disc image in which the lot ID has been embedded by the lot ID embedment unit 338. The disc manufacturing unit 340 manufactures the optical media using the disc image stored in the disc image storage unit 339. The packaging unit 360 assigns each optical medium with a corresponding serial ID by recording the serial ID (PMSN) generated by the serial ID generation unit 351 on a special area on an optical disc manufactured by the disc manufacturing unit 340, or by including an insert with the serial ID (sticker ID) generated by the serial ID generation unit 351 printed thereon in a package of an optical disc manufactured by the disc manufacturing unit 340 during a packaging process. This completes the packaging of each optical medium (S1353).

### <Overview of Packaged Optical Medium>

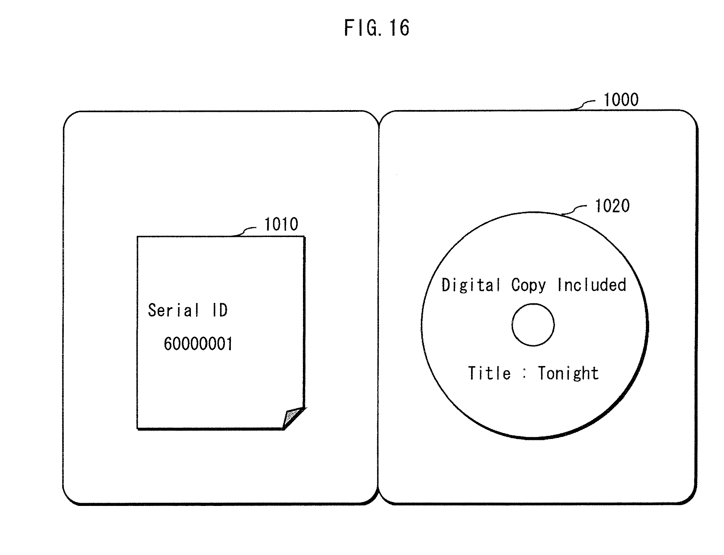

FIG. 16 shows an example of an appearance of an optical medium that is produced by the content production apparatus 300 and then is packaged.

The packaged optical medium includes a packaging box 1000, an insert 1010, and an optical medium 1020.

The packaging box 1000 is a case in which the insert 1010 and the optical medium 1020 are packaged.

The insert 1010 is included in the packaging box 1000. The serial ID (sticker ID) is printed on the insert 1010.

The serial ID (PMSN) may be or may not be recorded on the optical medium 1020.

### <Structure of First Recording Medium Apparatus 400>

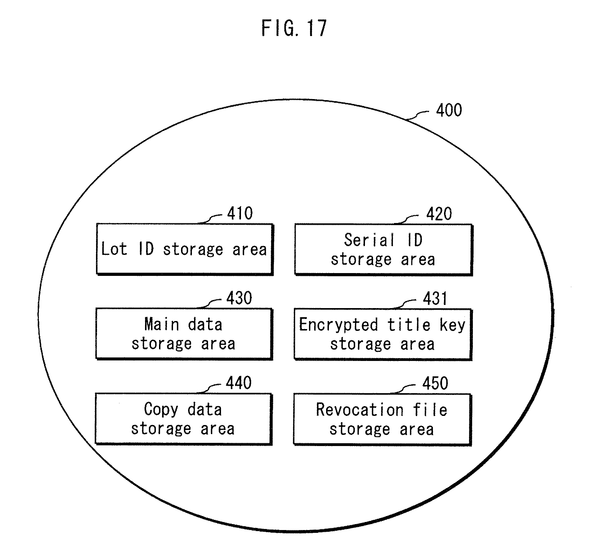

FIG. 17 shows the structure of the first recording medium apparatus 400.

The first recording medium apparatus 400 includes a lot ID storage area 410, a serial ID storage area 420, a main data storage area 430, an encrypted title key storage area 431, a copy data storage area 440, and a revocation file storage area 450.

The lot ID storage area 410 is an area in which the lot ID is stored.

The serial ID storage area 420 is an area in which the serial ID is stored.

The main data storage area 430 is an area in which the main data is stored.

The encrypted title key storage area 431 is an area in which an encrypted title key is stored.

The copy data storage area 440 is an area in which the copy data is stored.

The revocation file storage area 450 is an area in which a revocation file is stored.

### <Detailed Structure of Playback/Copy Apparatus 500>

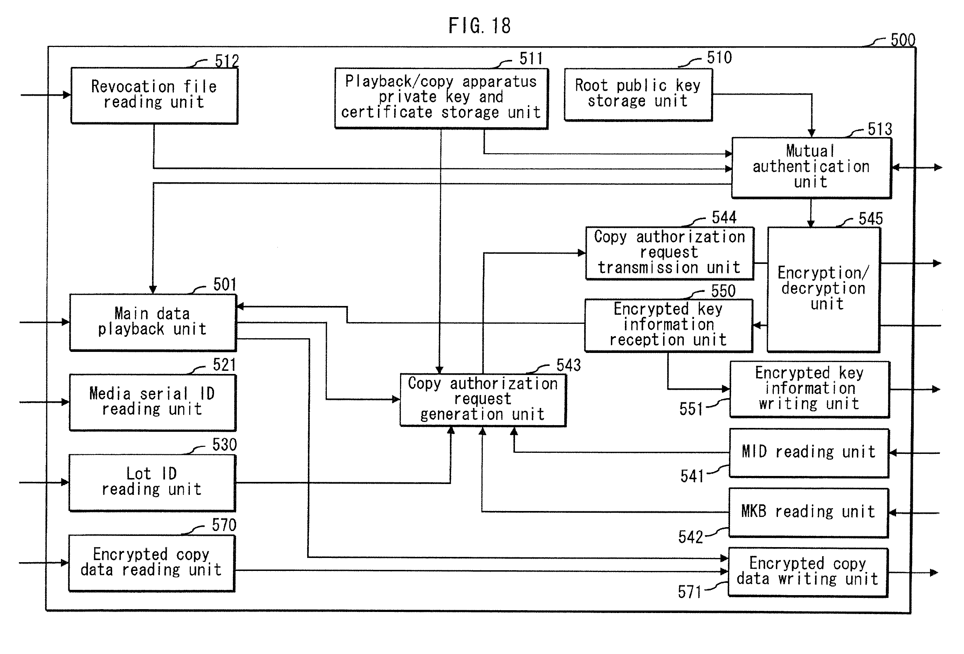

FIG. 18 shows a detailed structure of the playback/copy apparatus 500.

As shown in FIG.18, the playback/copy apparatus 500 includes a main data playback unit 501, a root public key storage unit 510, a playback/copy apparatus private key and certificate storage unit 511, a revocation file reading unit 512, a mutual authentication unit 513, a disc serial ID reading unit 521, a lot ID reading unit 530, an MID reading unit 541, an MKB reading unit 542, a copy authorization request generation unit 543, a copy authorization request transmission unit 544, an encryption/decryption unit 545, an encrypted key information reception unit 550, an encrypted key information writing unit 551, an encrypted copy data reading unit 570, and an encrypted copy data writing unit 571.

The main data playback unit 501 plays back the main data recorded on the optical medium. When the optical medium is a Blu-ray ROM disc, the main data is a BDMV application. The main data includes, in addition to the video data and the audio data, an application that performs interactive operation. The application acquires the serial ID from a user's input or by using the disc serial ID reading unit 521, and transmits the acquired serial ID to the copy authorization request generation unit 543. Upon receiving error notification from the encrypted key information reception unit 550, the main data playback unit 501 displays, on the UI, a message showing that the copying is not allowed or the copying is allowed after the purchase.

The root public key storage unit 510 receives in advance the root public key transmitted from the key issuing authority 100, and stores therein the received public key during manufacturing.

The playback/copy apparatus private key and certificate storage unit 511 receives in advance the playback/copy apparatus private key and the playback/copy apparatus certificate transmitted from the key issuing authority 100, and stores therein the received playback/copy apparatus private key and playback/copy apparatus certificate during manufacturing.

The revocation file reading unit 512 reads the revocation file from the optical medium.

The mutual authentication unit 513 performs host/server mutual authentication with the authentication server 200, and shares a common key with the authentication server 200. Note that the host/server mutual authentication has already been explained with reference to FIG. 7.

The disc serial ID reading unit 521 reads the serial ID (PMSN) recorded on the optical medium.

The lot ID reading unit 530 reads the lot ID embedded in an image file on the optical medium.

The MID reading unit 541 reads the MID recorded on the second recording medium apparatus 600.

The MKB reading unit 542 reads the MKB recorded on the second recording medium apparatus 600.

The copy authorization request generation unit 543 acquires the serial ID received from the main data playback unit 501, the lot ID read by the lot ID reading unit 530, the MID read by the MID reading unit 541, the MKB read by the MKB reading unit 542, and the playback/copy apparatus certificate stored in the playback/copy apparatus private key and certificate storage unit 511, The copy authorization request generation unit 543 then generates the copy authorization request information from the certificate ID in the playback/copy apparatus certificate.

The copy authorization request transmission unit 544 transmits the copy authorization request information generated by the copy authorization request generation unit 543.

The encryption/decryption unit 545 encrypts the copy authorization request information transmitted from the copy authorization request transmission unit 544 with the common key shared by the mutual authentication unit 513 and the authentication server 200, and transmits the encrypted copy authorization request information.

The encrypted key information reception unit 550 receives, via the encryption/decryption unit 545, the encrypted key information from the authentication server 200. When the copying is not allowed by the authentication server 200, or when it has been notified that the copying is not allowed but the viewing is possible after the purchase, the encrypted key information reception unit 550 notifies the main data playback unit 501 of an error.

The encrypted key information writing unit 551 writes the encrypted key information including the encryption key and the encrypted Usage Rule to the second recording medium apparatus 600.

The encrypted copy data reading unit 570 reads the copy data recorded on the optical medium.

The encrypted copy data writing unit 571 writes the copy data read by the encrypted copy data reading unit 570 to the second recording medium apparatus 600.

### <Detailed Structure of Playback/Copy Apparatus 500>

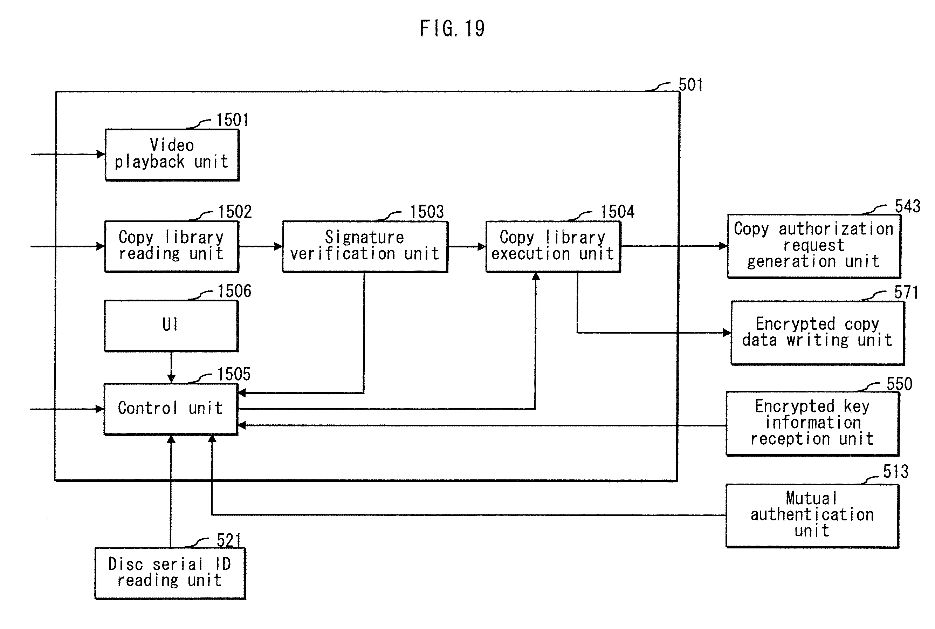

FIG. 19 shows a more detailed structure of the main data playback unit 501 in the playback/copy apparatus 500.

As shown in FIG. 19, the main data playback unit 501 includes a video playback unit 1501, a copy library reading unit 1502, a signature verification unit 1503, a copy library execution unit 1504, a control unit 1505, and a UI 1506. Note that the mutual authentication unit 513, the disc serial ID reading unit 521, the copy authorization request generation unit 543, the encrypted key information reception unit 550, and the encrypted copy data writing unit 571 shown in FIG. 19 have already been explained with reference to FIG. 18.

The video playback unit 1501 plays back the video of the main data recorded on the optical medium.

The copy library reading unit 1502 reads the copy library recorded on the optical medium.

The signature verification unit 1503 performs signature verification of the copy library read by the copy library reading unit 1502. When the signature verification fails, the signature verification unit 1503 notifies the control unit 1505 of the failure of the signature verification without executing the copy library. When the signature verification succeeds, the signature verification unit 1503 instructs the copy library execution unit 1504 to execute the copy library.

The copy library execution unit 1504 executes the copy library. When the optical medium is a Blu-ray ROM disc, the BDJ application performs socket communication with the copying function of the Blu-ray player by using the copy library. This allows the copying, the request to acquire the MID and the MKB from the second recording medium apparatus 600, and so on without extending the API. That is to say, the digital contents are copied seamlessly from the menu built by the BDJ.

When the signature verification by the signature verification unit 1503 fails, the control unit 1505 displays a message showing the failure of the signature verification on the UI 1506. Upon being notified by the encrypted key information reception unit 550 that the copying is not allowed, the control unit 1505 displays a message showing that the copying is not allowed on the UI 1506. Upon being notified by the encrypted key information reception unit 550 that the copying is not allowed but the viewing is possible after the purchase, the control unit 1505 displays, on the UI 1506, a message showing that the viewing is possible after the purchase as well as a link to the website where the purchase can be made, to encourage the purchase. The control unit 1505 also receives the serial ID (PMSN) from the disc serial ID reading unit 521. Furthermore, the control unit 1505 instructs the UI 1506 to display a message to acquire the serial ID, and receives the serial ID (sticker ID) through the UI 1506. When the number of the received serial ID is one, the control unit 1505 transmits the received serial ID to the copy authorization request generation unit 543 via the copy library execution unit 1504 to generate the copy authorization request information. When the number of the received serial ID is two (i.e., the PMSN and the sticker ID), the control unit 1505 requests a user to determine which one of the received serial IDs should be transmitted to the authentication server 200, and transmits the determined serial ID to the copy authorization request generation unit 543 via the copy library execution unit 1504 to generate the copy authorization request information.

The UI 1506 notifies a user according to the instruction issued by the control unit 1505. The UI 1506 also displays a serial ID input form, receives an input from a user, and notifies the control unit 1505 of the received serial ID.

### <Copying Flow of Playback/Copy Apparatus 500>

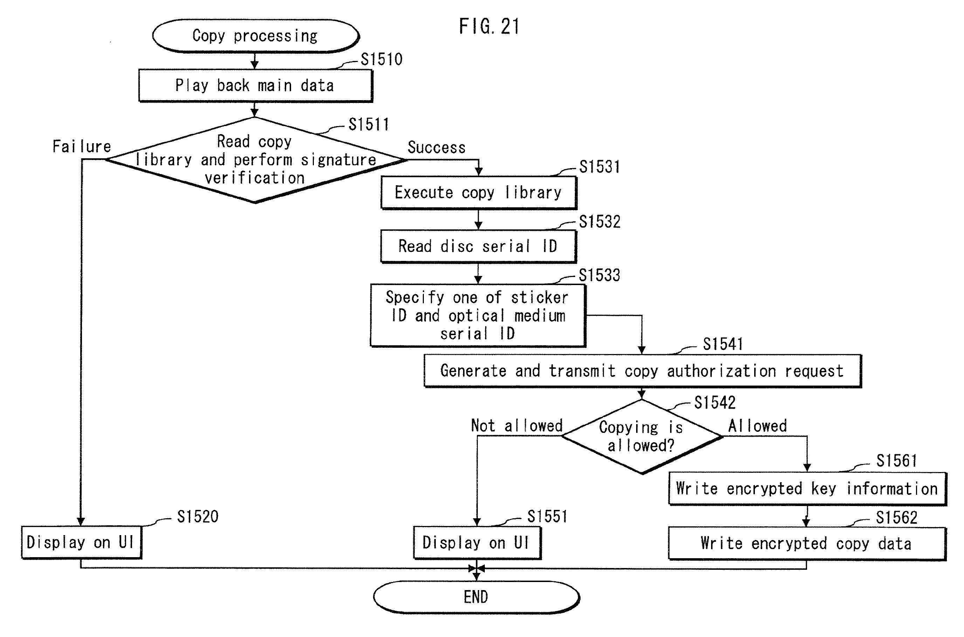

FIG. 21 shows a copying flow of the playback/copy apparatus 500.

First, the video playback unit 1501 acquires the video data and the audio data included in the main data from the optical medium, and plays back the acquired video data and audio data (S1510).

The copy library reading unit 1502 reads the copy library, and then the signature verification unit 1503 performs signature verification of the read copy library.

When the signature verification fails (the "Failure" branch of S1511), a message showing that the copying is not allowed because the copy library is invalid is displayed (S1520), and the processing is ended.

When the signature verification succeeds (the "Success" branch of S1511), the copy library is executed (S1531).

Then, the disc serial ID reading unit 521 reads the serial ID from the optical medium. When the serial ID is not recorded on the optical medium, the control unit 1505 is notified that the serial ID is not recorded. When the serial ID is read, the control unit 1505 is notified of the read serial ID (S1532).

When the serial IDs (PMSNs) are recorded on the optical medium, they are displayed on the UI to request a user to select the sticker ID or one of the serial IDs. When no serial ID (PMSN) is recorded on the optical medium, a UI for inputting the sticker ID is displayed, and the user is requested to input the sticker ID as a serial ID; accordingly, the serial ID is identified (S1533).

Next, the copy authorization request generation unit 543 generates the copy authorization request information (S1541). The copy authorization request transmission unit 544 notifies the copy authorization request information to the authentication server 200, and receives a reply from the authentication server 200. When the copying is allowed, processing proceeds to step S1561. When the copying is not allowed, or when the copying is allowed after the purchase, processing proceeds to step S1551 (S1542).

When the copying is not allowed (the "Not allowed" branch of S1542), a message showing that the serial ID is invalid is displayed. When the copying is allowed after the purchase, a message showing that the copying is not allowed but the viewing is possible after the purchase is displayed on the UI. In addition, a link to the website where the purchase can be made is also displayed on the screen to encourage the purchase (S1551).

When the copying is allowed (the "Allowed" branch of S1542), the encrypted key information writing unit 551 records the encrypted key information received from the authentication server 200 on the second recording medium apparatus 600 (S1561), and the encrypted copy data reading unit 570 reads the encrypted copy data from the optical medium. The encrypted copy data writing unit 571 writes the read encrypted copy data to the second recording medium apparatus 600 (S1562).

### <Detailed Structure of Second Recording Medium Apparatus 600>

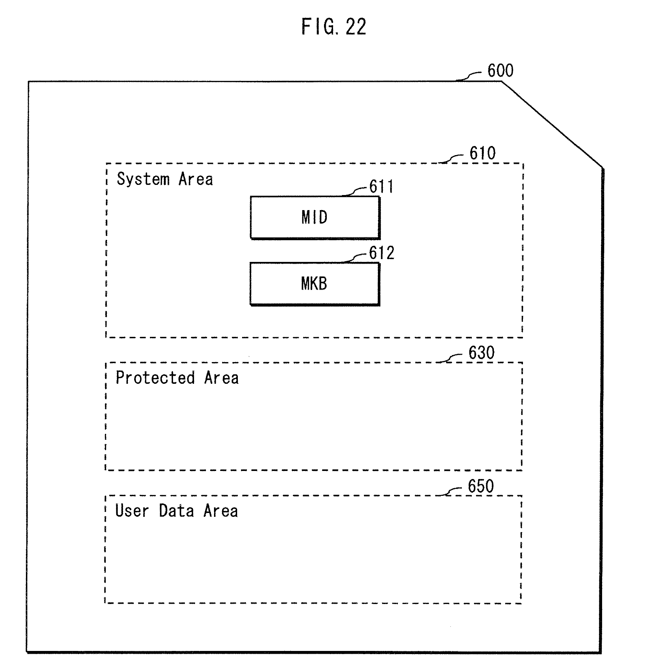

FIG. 22 shows an example of a detailed structure of the second recording medium apparatus 600 before the copying of the copy data.

As shown in FIG. 22, the second recording medium apparatus 600 includes a System Area 610, a Protected Area 630, and a User Data Area 650.

The System Area 610 is a protected area. Data held by the second recording medium apparatus 600 at the time when the second recording medium apparatus 600 is purchased is recorded on the System Area 610. An MID 611 and an MKB 612 are recorded in the System Area 610. The MID 611 is identification information for identifying the second recording medium apparatus 600. The MKB 612 is information used to protect the content key. When the second recording medium apparatus 600 is an SD card, the MKB 612 is defined by the 4C Entity.

The Protected Area 630 is a protected area. Data that is required to be protected after the purchase of the second recording medium apparatus 600 is written to the Protected Area 630.

The User Data Area 650 is an unprotected area. Data is written to the User Data Area 650 after the purchase of the second recording medium apparatus 600.

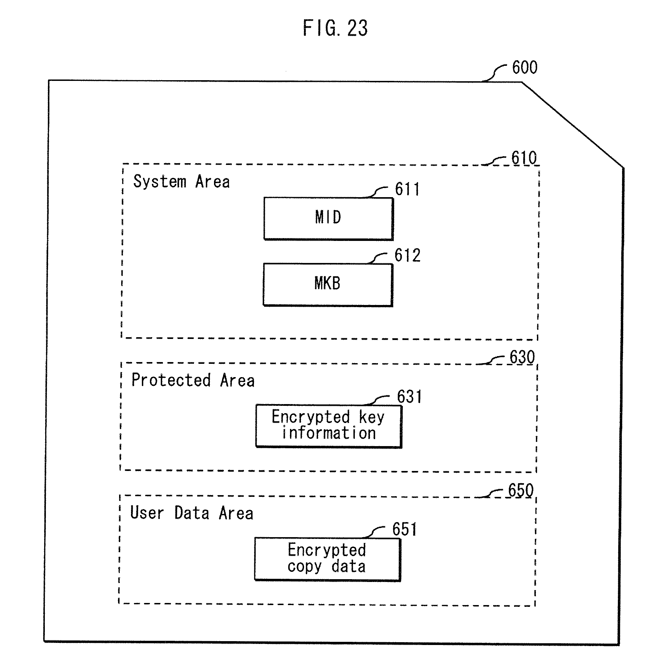

FIG. 23 shows an example of a detailed structure of the second recording medium apparatus 600 after the copying of the copy data.

Encrypted key information 631 is recorded in the Protected Area 630. The encrypted key information 631 includes an encrypted content key and a Usage Rule.

Encrypted copy data 651 is recorded in the User Data Area 650.

### <Detailed Structure of Playback Apparatus 700>

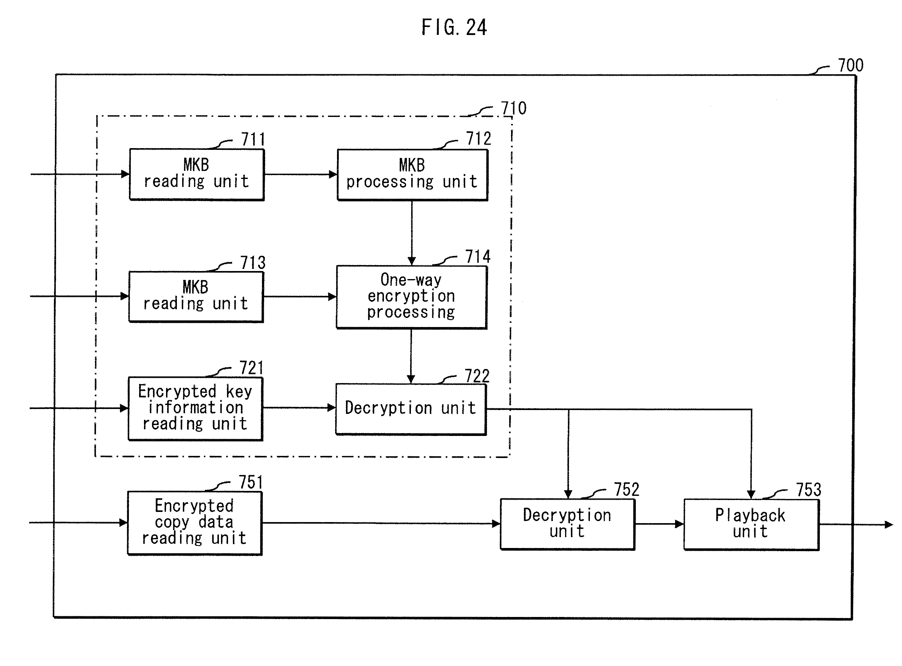

FIG. 24 shows a detailed structure of the playback apparatus 700.

As shown in FIG. 24, the playback apparatus 700 includes a key calculation unit 710, an MKB reading unit 711, an MKB processing unit 712, an MKB reading unit 713, one-way encryption processing 714, an encrypted key information reading unit 721, a decryption unit 722, an encrypted copy data reading unit 751, a decryption unit 752, and a playback unit 753.

The key calculation unit 710 calculates the content key for decrypting the copy data.

The MKB reading unit 711 reads the MKB from the second recording medium apparatus 600.

The MKB processing unit 712 processes the MKB read by the MKB reading unit 711.

The MID reading unit 713 reads the MID from the second recording medium apparatus 600.

The one-way encryption processing 714 encrypts, through the one-way function, intermediate data generated by the MKB processing unit 712 processing the MKB with use of the MID read by the MID reading unit 713 to acquire the encryption key for the content key.

The encrypted key information reading unit 721 reads the encrypted key information from the second recording medium apparatus 600.

The decryption unit 722 decrypts the encrypted key information read by the encrypted key information reading unit 721 with the protection key acquired by the one-way encryption processing 714 to generate the content key.

The encrypted copy data reading unit 751 reads the copy data from the second recording medium apparatus 600.

The decryption unit 752 decrypts the copy data read by the encrypted copy data reading unit 751 with the content key generated by the decryption unit 722.

The playback unit 753 performs playback using the decrypted copy data, and displays the played back data on a UI.

### <Playback Flow of Playback Apparatus 700>

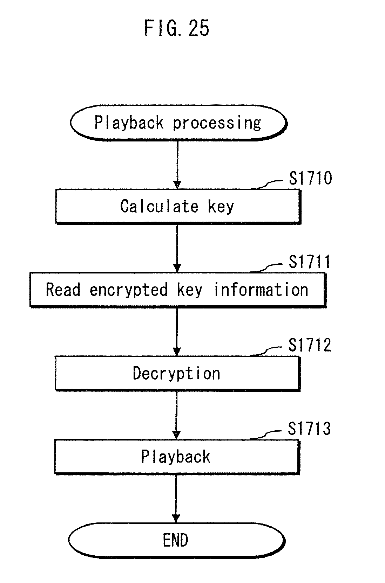

FIG. 25 shows a playback flow of the playback apparatus 700.

First, the MKB reading unit 711 reads the MKB from the second recording medium apparatus 600, and the MKB processing unit 712 processes the read MKB. Next, the MID reading unit 713 reads the MID from the second recording medium apparatus 600. The one-way encryption processing 714 encrypts, through the one-way function, intermediate data generated by the MKB processing unit 712 processing the MKB with use of the MID read by the MID reading unit 713 to acquire the encryption key for the content key (S 1710).

Thereafter, the encrypted key information reading unit 721 reads the encrypted key information from the second recording medium apparatus 600 (S1711).

The decryption unit 722 decrypts the encrypted key information with the protection key acquired by the one-way encryption processing 714 to generate the content key (S1712).

The playback unit 753 decodes and plays back the video and audio decrypted by the decryption unit 752 (S1713).

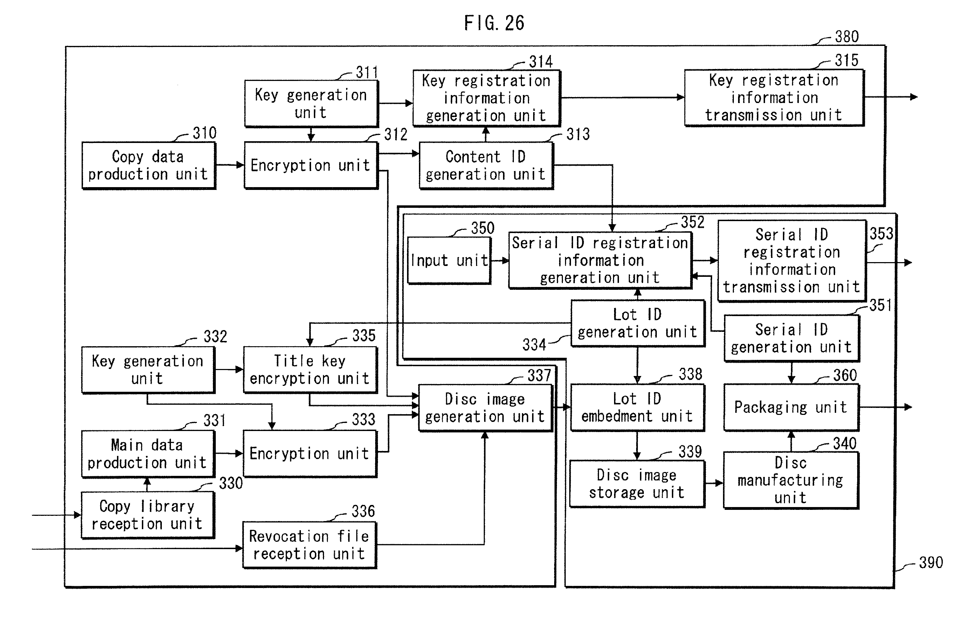

FIG. 26 shows a variation of the structure of the content production apparatus 300.

As shown in FIG. 26, the content production apparatus 300 may be composed of two parts, namely a content production unit 380 for generating a disc image, and a disc manufacturing unit 390 for receiving the generated disc image and manufacturing discs.

This is because, as for the disc manufacturing unit 390 that requires a significant capital investment, there are only a small number of disc manufacturers, whereas there are a large number of content producers who produce disc images. Content owners select a disc manufacturer and a content producer in view of functions, the ability to meet requirements, quality, a delivery date, costs, and so on, and entrust the selected disc manufacturer and content producer with disc image production and disc manufacturing.

Presumably, the content owners generally entrust the disc image producers with generation and transmission of the key registration information, and the disc manufacturers with generation and transmission of the serial ID registration information. With the above structure, the disc manufacturers do not have to handle the content key of the copy data unnecessarily. Therefore, unnecessary risks are reduced.

The detailed structure of the content production unit 380 and the disc manufacturing unit 390 is the same as the one described in connection with the content production apparatus 300 shown in FIG. 14.

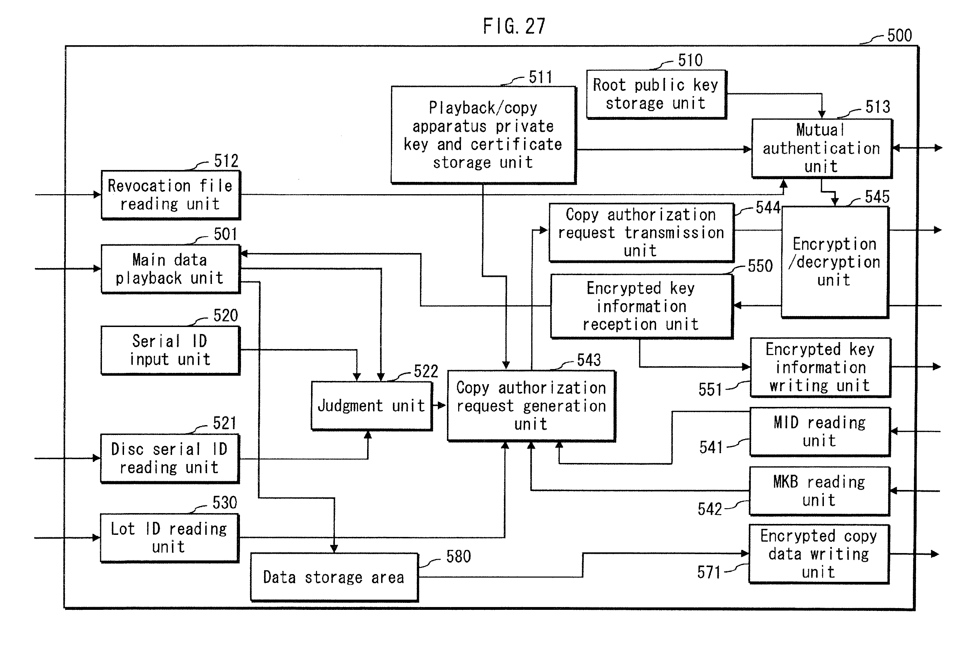

FIG. 27 shows the structure in which the copy data is downloaded using a bi-directional communication function of an application and recorded on the second recording medium apparatus 600, instead of being distributed by being recorded on the optical medium. The structure of FIG. 27 is different from that of FIG. 18 in that the encrypted copy data reading unit 570 is not included, but a data storage area 580 and a judgment unit 522 are newly added. Only the differences between FIG. 18 and FIG. 27 are described here.

The main data playback unit 501 downloads the copy data on a web server using a web communication function in the main data, and stores the downloaded copy data in the data storage area 580 in the playback/copy apparatus 500. When the optical medium is a Blu-ray ROM disc, the data storage area 580 is a BUDA (Biding Unite Data Area).

The data storage area 580 stores therein the copy data downloaded by the main data playback unit 501.

The encrypted copy data writing unit 571 writes the copy data stored in the data storage area 580 to the second recording medium apparatus.

Upon obtaining the serial ID from both the serial ID input unit 520 and the disc serial ID reading unit 521, the judgment unit 522 judges whether the data is for rental use or for retail use. When the data is for rental use, the judgment unit 522 performs control so as not to transmit the data to the copy authorization request generation unit 543, regardless of the presence of the disc serial ID.

### <Copying Flow of Variation of Playback/copy Apparatus 500>

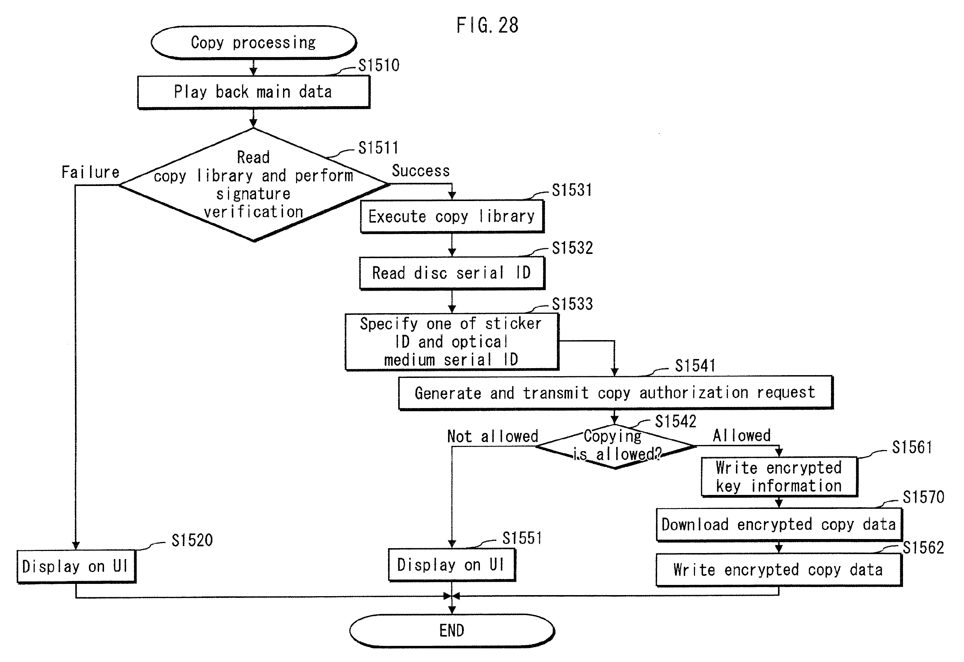

FIG. 28 shows a copying flow of a variation of the playback/copy apparatus 500.

First, the video playback unit 1501 acquires the video data and the audio data included in the main data from the optical medium, and plays back the acquired video data and audio data (S1510).

Next, the copy library reading unit 1502 reads the copy library, and then the signature verification unit 1503 performs signature verification of the read copy library. When the signature verification fails (the "Failure" branch of S15111), a message showing that the copying is not allowed because the copy library is invalid is displayed (S1520). When the signature verification succeeds (the "Success" branch of S1511), the copy library execution unit 1504 executes the copy library (S1531). Then, the disc serial ID reading unit 521 reads the serial ID from the optical medium. When the serial ID is not recorded on the optical medium, the control unit 1505 is notified to that effect. When the serial ID is read, the control unit 1505 is notified of the read serial ID (S15532).

When the serial IDs (PMSNs) are recorded on the optical medium, they are displayed on the UI to request a user to select the sticker ID or one of the serial IDs. When no serial ID (PMSN) is recorded on the optical medium, a UI for inputting the sticker ID is displayed, and the user is requested to input the sticker ID as a serial ID; accordingly, the serial ID is identified (S1533).

Then, the copy authorization request generation unit 543 generates the copy authorization request information (S1541). The copy authorization request transmission unit 544 notifies the generated copy authorization request information to the authentication server 200, and receives a reply from the authentication server 200.

When the copying is not allowed (the "Not allowed" branch of S1542), or when the copying is allowed after the purchase, processing proceeds to step S 1551. When the copying is not allowed, a message showing that the serial ID is invalid is displayed in S1551. When the copying is allowed after the purchase, a message showing that the copying is not allowed but the viewing is possible after the purchase is displayed on the UI. In addition, a link to the website where the purchase can be made is also displayed on the screen to encourage the purchase (S1551).

When the copying is allowed (the "Allowed" branch of S1542), the encrypted key information writing unit 551 records the encrypted key information on the second recording medium apparatus 600 (S1561). The main data playback unit 501 stores the copy data in the data storage area 580 (S1570). The encrypted copy data writing unit 571 writes the encrypted copy data to the second recording medium apparatus 600 (S 1562).

### [Embodiment 2]

### <Overall Structure>

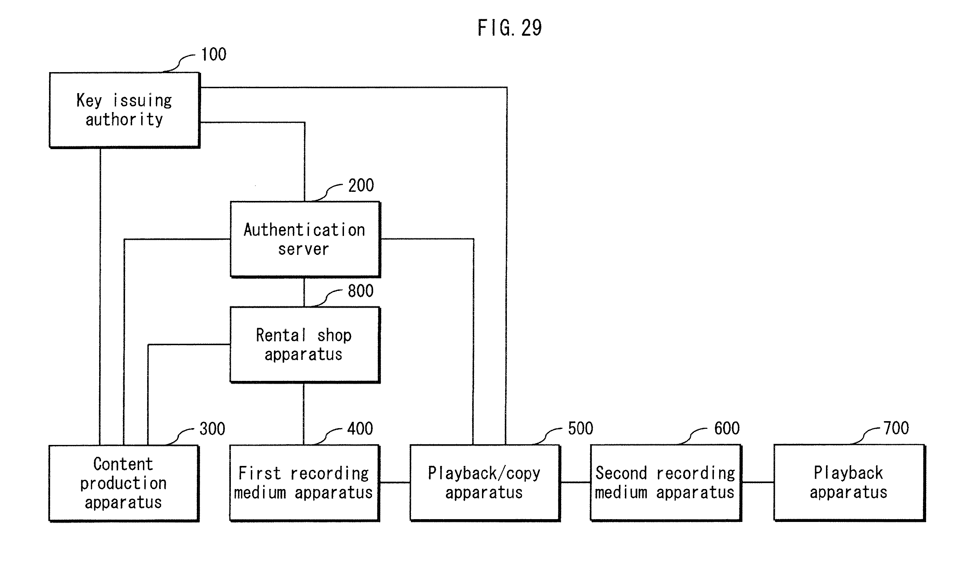

FIG. 29 shows an overall structure of a copy system in Embodiment 2 of the present invention. The copy system includes the key issuing authority 100, the authentication server 200, the content production apparatus 300, the first recording medium apparatus 400, the playback/copy apparatus 500, the second recording medium apparatus 600, the playback apparatus 700, and a rental shop apparatus 800. Note that the key issuing authority 100, the content production apparatus 300, and the rental shop apparatus 800 respectively represent an apparatus that belongs to the key issuing authority, an apparatus that belongs to a content producer, and an apparatus that belongs to a rental shop. The first recording medium apparatus 400 is an optical medium such as a Blu-ray ROM disc and a DVD-ROM, and the second recording medium apparatus 600 is a memory device such as an SD card and USB memory. Differences from Embodiment 1 are mainly described below.

### <Structure of Relevant Data>

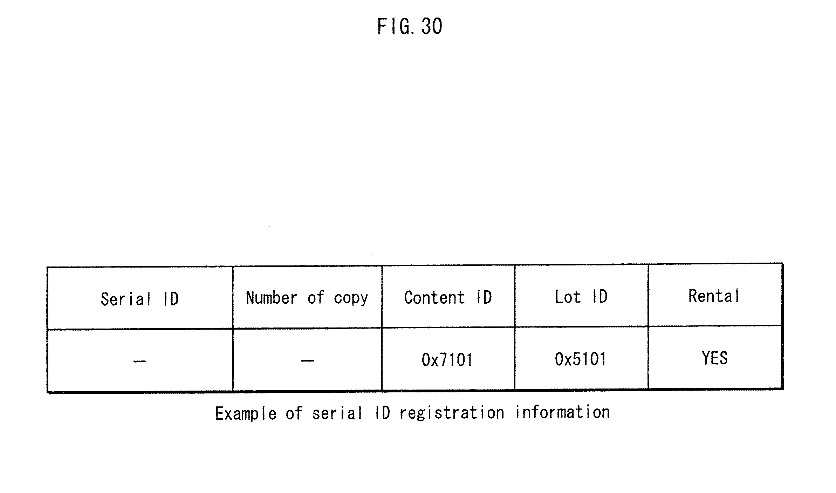

FIG. 30 shows an example of the serial ID registration information transmitted by the content production apparatus 300 to the authentication server. Compared with the serial ID registration information in Embodiment 1 shown in FIG. 8B, a "Rental" column is added to the list of the serial ID registration information shown in FIG. 30. Also, the "Serial ID" and "Number of copy" columns in the serial ID registration information may not be set.

Specifically, in FIG. 30, the list contains only one entry. The "Rental" column contains the value "YES". This shows that the copy data corresponding to the content ID 0x7101 and the lot ID 0x5101 is for rental use and not for sales (e.g., retail) use.

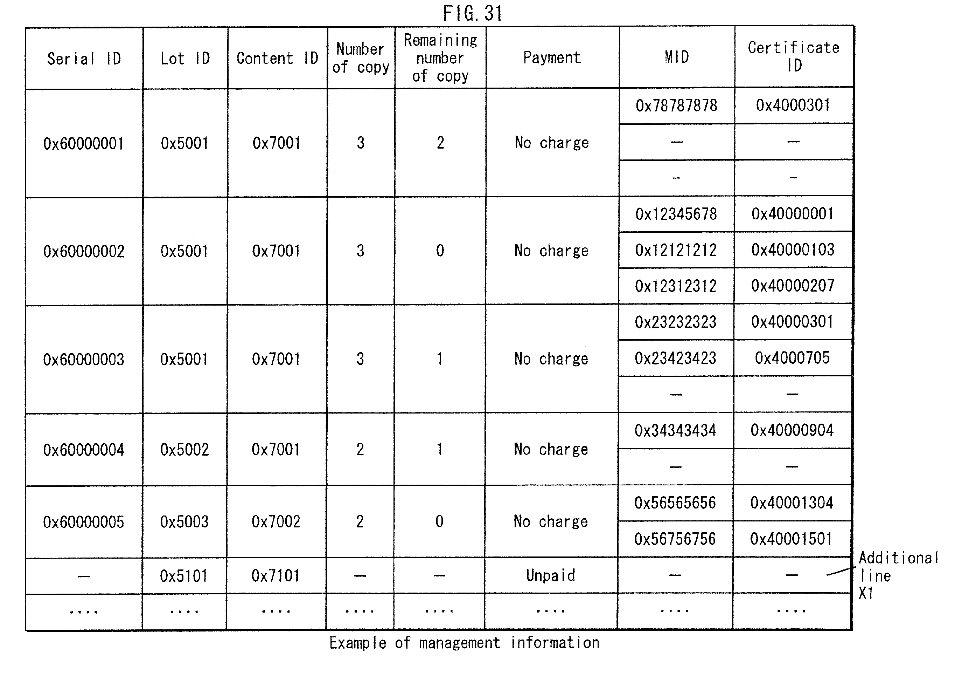

FIG. 31 shows an example of the management information stored in the management information storage unit 221 in the authentication server 200 immediately after the serial ID registration information shown in FIG. 30 is registered with the authentication server 220.

Since the serial ID registration information shown in FIG. 30 is registered, a line XI is newly inserted in the management information shown in FIG. 31. In the line X1, the "Serial ID" column is not set, the "Lot ID" column contains the value "0x5101 ", the "Content ID" column contains the value "0x7101", the "Number of copy" column is not set, the "Remaining number of copy" is not set, the "Payment" column contains the value "Unpaid", the "MID" column is not set, and the "Certificate ID" column is not set.

### <Detailed Structure of Rental Shop Apparatus 800>

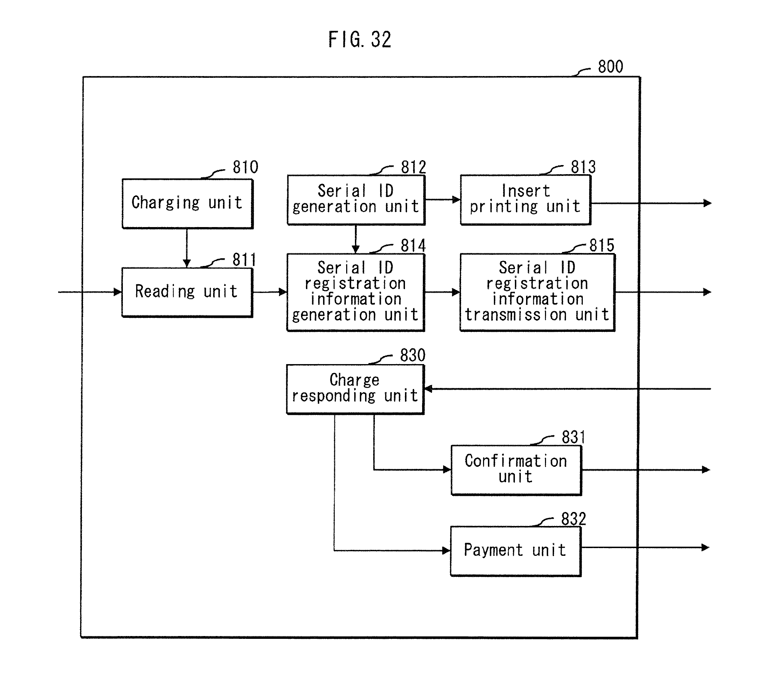

FIG. 32 shows a detailed structure of the rental shop apparatus 800.

The rental shop apparatus 800 includes a charging unit 810, a reading unit 811, a serial ID generation unit 812, an insert printing unit 813, a serial ID registration information generation unit 814, a serial ID registration information transmission unit 815, a charge responding unit 830, a confirmation unit 831, and a payment unit 832.

The charging unit 810 receives payment from a user, and makes the payment in the rental shop's account.

After the charging unit 810 completes the payment, the reading unit 811 reads the content ID and the lot ID of an optical medium to be rented to a user by, for example, reading a barcode appended to the optical medium.

The serial ID generation unit 812 generates the serial ID used to control copyright of the copy data recorded on the optical medium to be rented.

The insert printing unit 813 produces an insert on which the serial ID generated by the serial ID generation unit 812 is printed, and provides a user with the insert together with the optical medium to be rented to the user.

The serial ID registration information generation unit 814 generates the serial ID registration information from the serial ID generated by the serial ID generation unit 812 and the content ID and the lot ID read by the reading unit 811.

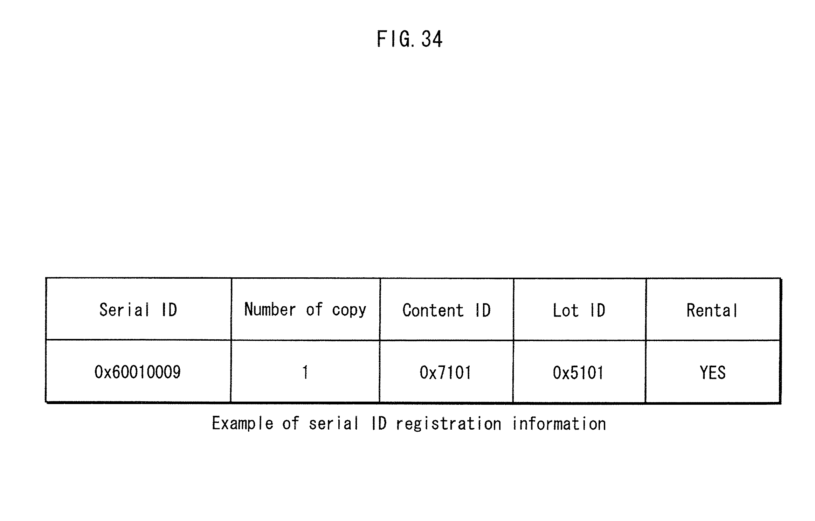

FIG. 34 shows an example of the serial ID registration information generated by the serial ID registration information generation unit 814. The "Serial ID" column contains the value "0x60010009", the "Number of copy" column contains the value "1 ", the "Content ID" column contains the value "0x7101", the "Lot ID" column contains the value "0x5101", and the "Rental" column contains the value "YES".

The serial ID registration information transmission unit 815 transmits the serial ID registration information generated by the serial ID registration information generation unit 814 to the authentication server 200.

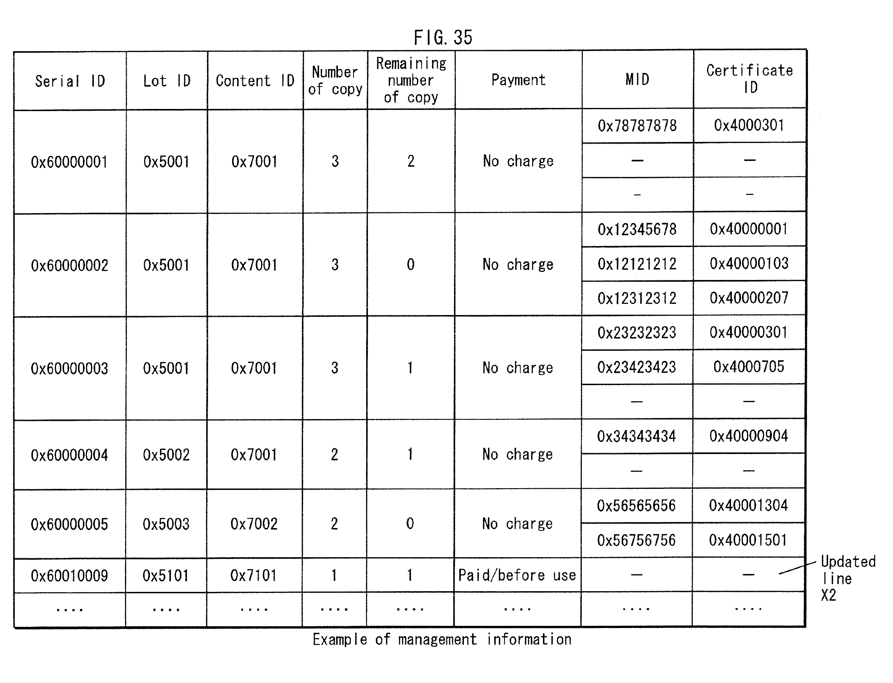

Note that FIG. 35 shows an example of the management information stored in the management information storage unit 221 in the authentication server 200 immediately after the serial ID registration information transmission unit 815 transmits the serial ID registration information to the authentication server 200.

Since the serial ID registration information shown in FIG. 34 is registered, a line X2 is updated in the management information shown in FIG. 35. In the line X2, the "Serial ID" column contains the value "0x60010009", the "Lot ID" column contains the value "0x5101", the "Content ID" column contains the value "0x7101", the "Number of copy" column contains the value "1", the "Remaining number of copy" column contains the value "1", the "Payment" column contains the value "Paid/before use", and the "MID" and "Certificate ID" columns are not set.

Upon receiving a payment request from the content production apparatus 300, the charge responding unit 830 instructs the confirmation unit 831 to check whether the authentication server 200 has authorized the playback/copy apparatus 500 to copy the copy data corresponding to the serial ID.

Upon receiving the instruction from the charge responding unit 830, the confirmation unit 831 checks whether the authentication server 200 has authorized the playback/copy apparatus 500 to copy the copy data corresponding to the serial ID.

When the confirmation unit 831 confirms that that authentication server 200 has authorized the playback/copy apparatus 500, the payment unit 832 makes payment to the content production apparatus 300.

### <Serial ID Registration and Payment Request Responding Flow of Rental Shop Apparatus 800>

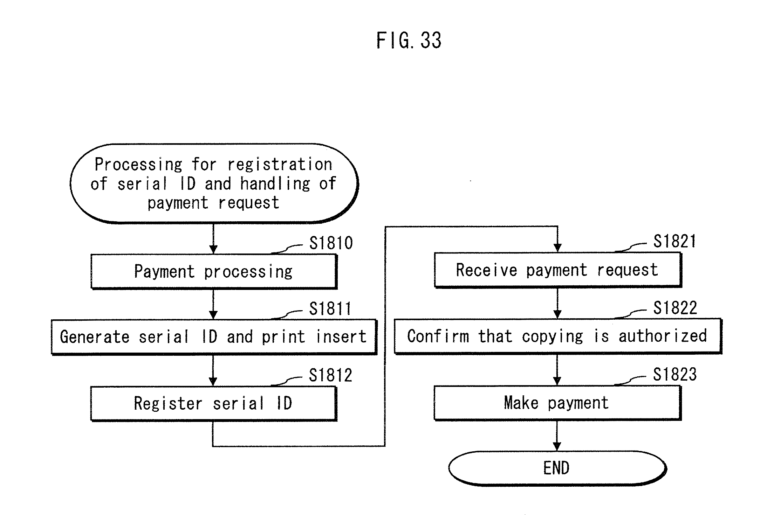

FIG. 33 shows a flow of processing for registration of a serial ID and handling of payment request, which is performed by the rental shop apparatus 800.

First, the charging unit 810 receives payment from a user, and makes the payment in the rental shop's account (S 1810).

The serial ID generation unit 812 generates the serial ID used to control copyright of the copy data recorded on the optical medium to be rented. The insert printing unit 813 produces an insert on which the serial ID generated by the serial ID generation unit 812 is printed, and provides a user with the insert together with the optical medium to be rented to the user (S1811).

After the charging unit 810 completes the payment, the reading unit 811 reads the content ID and the lot ID of an optical medium to be rented to a user by, for example, reading a barcode appended to the optical medium. The serial ID registration information generation unit 814 generates the serial ID registration information from the serial ID generated by the serial ID generation unit 812 and the content ID and the lot ID read by the reading unit 811. The serial ID registration information transmission unit 815 transmits the serial ID registration information generated by the serial ID registration information generation unit 814 to the authentication server 200 (S1812).

The charge responding unit 830 receives the payment request from the content production apparatus 300 (S1821).

Upon receiving the instruction from the charge responding unit 830, the confirmation unit 831 checks whether the authentication server 200 has authorized the playback/copy apparatus 500 to copy the copy data corresponding to the serial ID (S 1822).

When the confirmation unit 831 confirms that that authentication server 200 has authorized the playback/copy apparatus 500, the payment unit 832 makes payment to the content production apparatus 300. When the confirmation unit 831 confirms that authentication server 200 has not authorized the playback/copy apparatus 500, the payment unit 832 does not perform the payment processing (S1823).

### <Detailed Structure of Authentication Server 200>

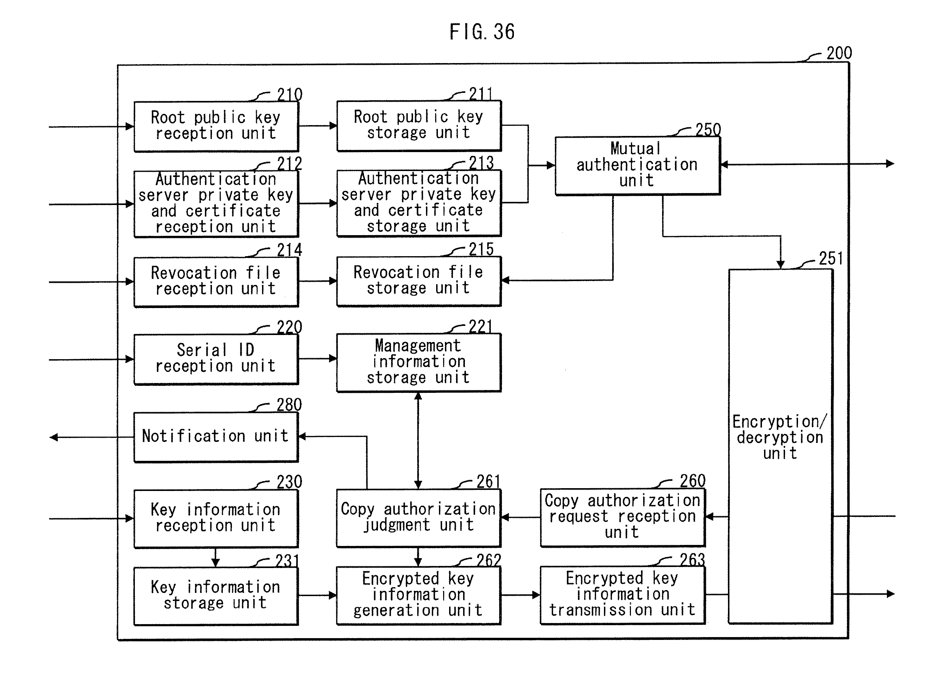

FIG. 36 shows a detailed structure of the authentication server 200 in Embodiment 2.

As compared to FIG. 6, the structure of the authentication server 200 shown in FIG. 36 additionally includes a notification unit 280.

The following describes the detailed operations of the serial ID reception unit 220, the management information storage unit 221, the copy authorization judgment unit 261, and the notification unit 280, which are different from those in the authentication server 200 shown in FIG. 6.

Upon receiving the serial ID registration information from the rental shop apparatus 800, the serial ID reception unit 220 updates the management information stored in the management information storage unit 221.

The management information storage unit 221 updates the management information using the serial ID registration information that the serial ID reception unit 220 received from the rental shop apparatus 800.

Upon receiving the copy authorization request information from the playback/copy apparatus 500 via the encryption/decryption unit 251 and the copy authorization request reception unit 260, the copy authorization judgment unit 261 updates the management information stored in the management information storage unit 221.

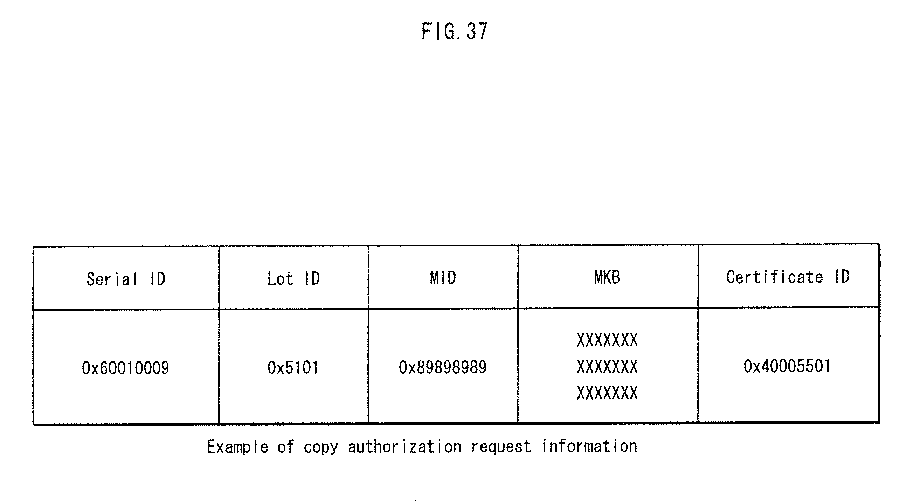

FIG. 37 shows an example of the copy authorization request information received from the rental shop apparatus 800. The "Serial ID" column contains the value "0x60010009", the "Lot ID" column contains the value "0x5101", the "MID" column contains the value "0x89898989", and the "MKB" column contains MKB file data itself. The MKB file data is described as "XXX...X" in FIG. 37. The "Certificate ID" column contains the value "0x40005501".

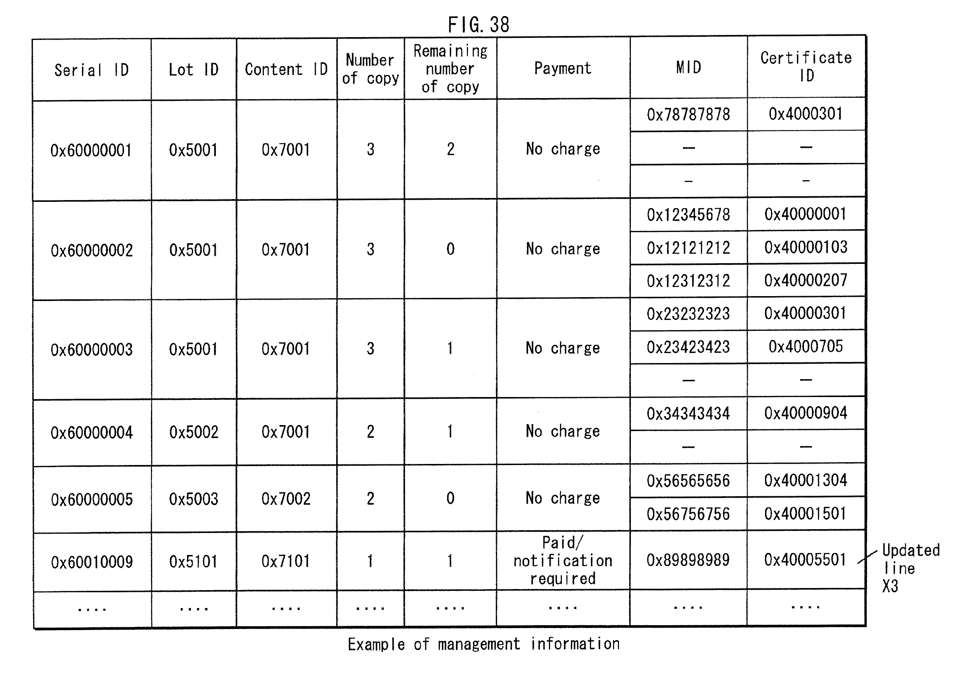

FIG. 38 shows an example of the management information immediately after the copy authorization judgment unit 261 receives the copy authorization request information from the playback/copy apparatus 500 and updates the management information stored in the management information storage unit 221.

In this case, a line X3 is updated. In the line X3, the "Serial ID" column contains the value "0x60010009", the "Lot ID" column contains the value "0x5101", the "Content ID" column contains the value "0x7101", the "Number of copy" column contains the value "1", the "Remaining number of copy" column contains the value "0", the "Payment" column contains the value "Paid/notification required", the "MID" column contains the value "0x89898989", and the "Certificate ID" column contains the value "0x400005501". The copy authorization judgment unit 261 further instructs the notification unit 280 to notify the content production apparatus 300 that the payment request may be issued to the rental shop 800.

Upon receiving the instruction from the copy authorization judgment unit 261, the notification unit 280 notifies the content production apparatus 300 that the payment request may be issued to the rental shop 800.

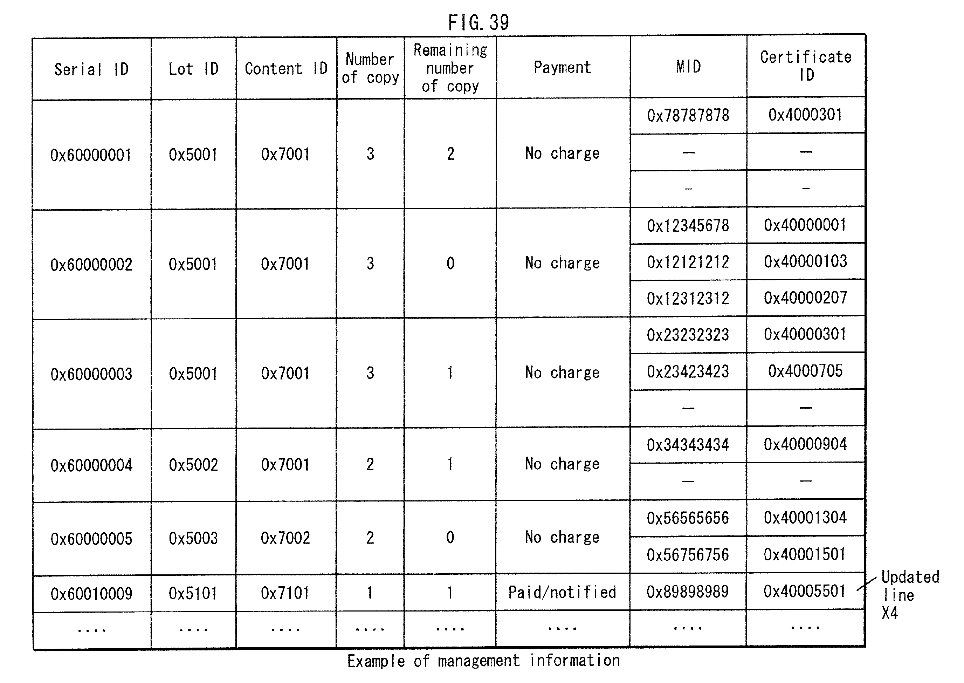

FIG. 39 shows an example of the management information stored in the management information storage unit 221 in the authentication server 200 immediately after the notification unit 280 notifies the content production apparatus 300 that the payment request may be issued to the rental shop 800. A line X4 is updated in the management information in FIG. 39. In the line X4, the "Serial ID" column contains the value "0x60010009", the "Lot ID" column contains the value "0x5101", the "Content ID" column contains the value "0x7101", the "Number of copy" column contains the value "1", the "Remaining number of copy" column contains the value "0", the "Payment" column contains the value "Paid/notified", the "MID" column contains the value "0x89898989", and the "Certificate ID" column contains the value "0x400005501".

### <Authentication Flow of Authentication Server 200>

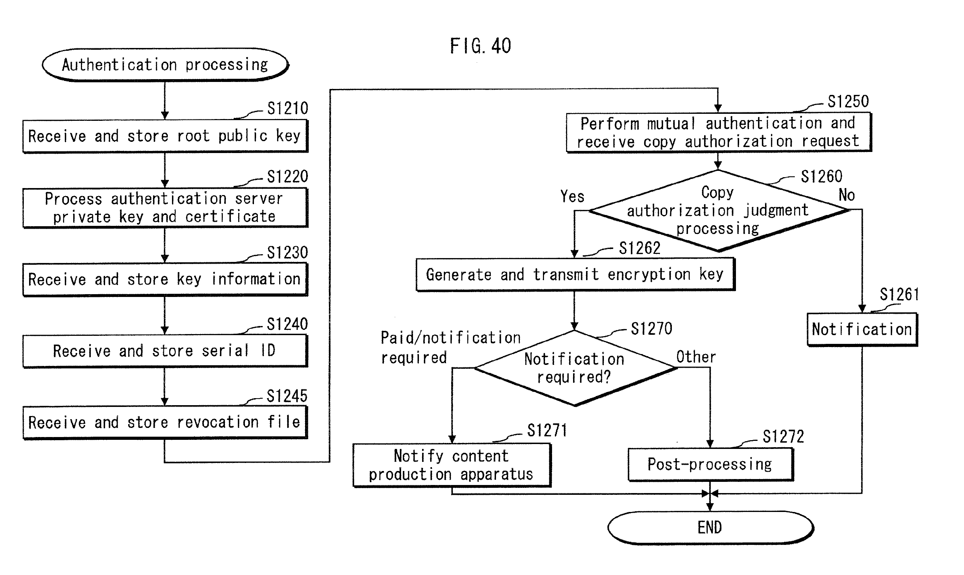

FIG. 40 shows an authentication flow of the authentication server 200 in Embodiment 2.

Upon receiving the root public key from the key issuing authority 100, the root public key reception unit 210 stores the received root public key in the root public key storage unit 211 (S1210).

Upon receiving the authentication server private key and the authentication server certificate from the key issuing authority 100, the authentication server private key and certificate reception unit 212 securely stores the received authentication server private key and authentication server certificate in the authentication server private key and certificate storage unit 213 (S1220).

Upon receiving key registration information from the content production apparatus 300, the key information reception unit 230 stores the received key registration information in the key information storage unit 231 (S1230).

Upon receiving the serial ID registration information from the content production apparatus 300 or the rental shop apparatus 800, the serial ID reception unit 220 updates the management information, and then stores the updated management information in the management information storage unit 221 (S1240).

Upon receiving the revocation file from the key issuing authority 100, the revocation file reception unit 214 compares a version of the received revocation file with a version of the revocation file stored in the revocation file storage unit 215. When the received revocation file is updated, the revocation file stored in the revocation file storage unit 215 is replaced by the received revocation file (S1245).

Upon receiving a request from the playback/copy apparatus 500, the mutual authentication unit 250 performs mutual authentication with the playback/copy apparatus 500. The mutual authentication processing is performed in the procedures shown in FIG. 7.

The playback/copy apparatus certificate is transmitted from the playback/copy apparatus 500 to the authentication server 200. The authentication server certificate is transmitted from the authentication server 200 to the playback/copy apparatus 500.

The mutual authentication unit 250 compares the certificate ID in the playback/copy apparatus certificate of the playback/copy apparatus 500 with information in the revocation list. When they match, the mutual authentication unit 250 notifies the playback/copy apparatus 500 that the content ID is invalid. When they do not match, the mutual authentication unit 250 securely shares the common key with the playback/copy apparatus 500, and proceeds to perform the processing in step S1251 onward (S1250).

More specifically, the copy authorization judgment processing in steps S1251, S1252, S1253 and S1254 shown in the authentication flow of the authentication server 200 in Embodiment 1 (FIG. 13) is performed.

When the copying is not authorized (the "No" branch of S1260), the notification processing in steps S 1256 and S 1257 shown in the authentication flow of the authentication server 200 in Embodiment 1 (FIG. 13) is performed (S1261).

When the copying is authorized (the "Yes" branch of S1260), the processing in step S1255 shown in the authentication flow of the authentication server 200 in Embodiment 1 (FIG. 13) is performed (S1262).

Next, the copy authorization judgment unit 261 checks the management information stored in the management information storage unit 221, as well as the "Payment" column of an entry corresponding to the serial ID in the copy authorization request information received from the playback/copy apparatus 500.

When the "Payment" column contains the value "Paid/notification required" (the "Paid/notification required" branch of S1270), the copy authorization judgment unit 261 instructs the notification unit 280 to notify the content production apparatus 300 that the payment request may be issued. If the serial ID and the rental shop information are notified at the same time, the content production apparatus 300 issues the payment request to the rental shop (S1271).

On the other hand, when the "Payment" column contains any value other than the value "Paid/notification required" (the "Other" branch of S1270), no processing is performed in particular (S1272).

### [Embodiment 3]

### <Overall Structure>

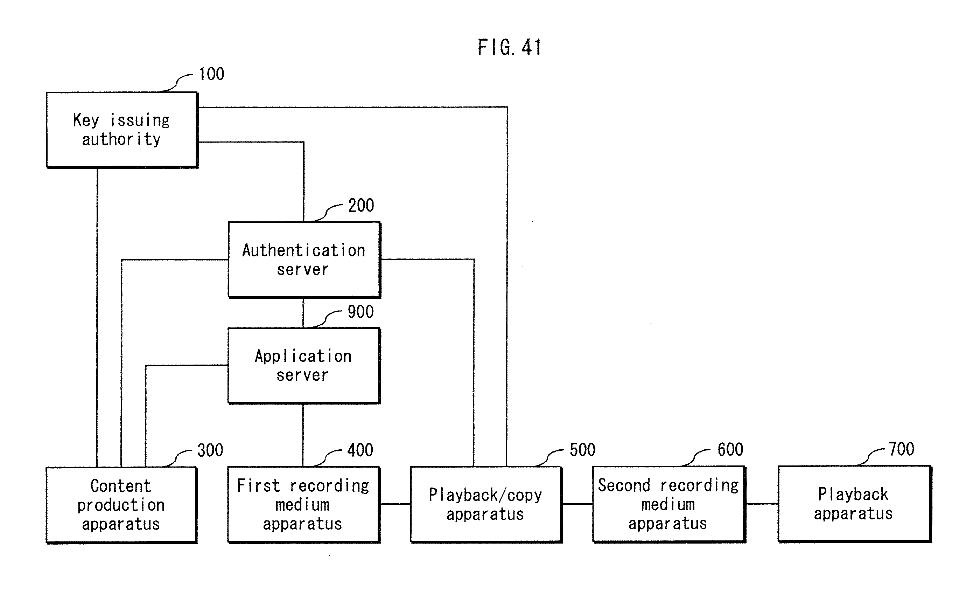

FIG. 41 shows an overall structure of a copy system in Embodiment 3 of the present invention. The copy system includes the key issuing authority 100, the authentication server 200, the content production apparatus 300, the first recording medium apparatus 400, the playback/copy apparatus 500, the second recording medium apparatus 600, the playback apparatus 700, and an application server 900. Note that the key issuing authority 100 and the content production apparatus 300 respectively represent an apparatus that belongs to the key issuing authority and an apparatus that belongs to a content producer. Differences from Embodiments 1 and 2 are mainly described below.

### <Detailed Structure of Application Server 900>

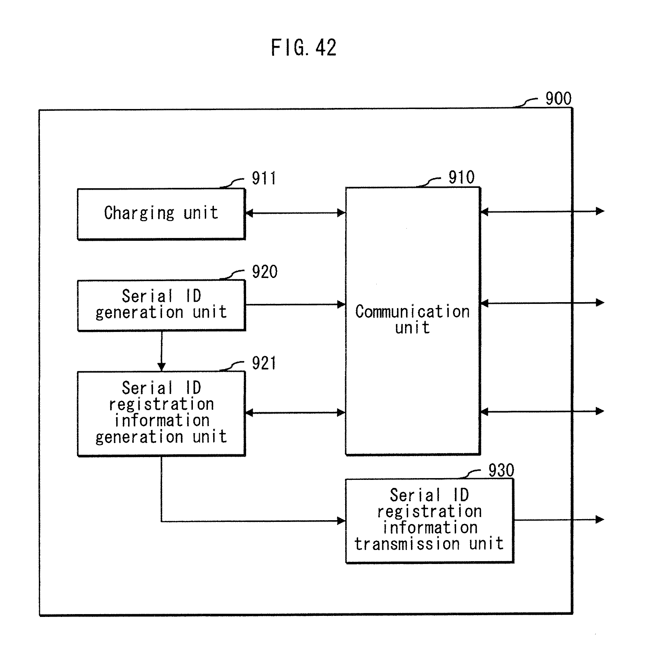

FIG. 42 shows a detailed structure of the application server 900.

As shown in FIG. 42, the application server 900 includes a communication unit 910, a charging unit 911, a serial ID generation unit 920, a serial ID registration information generation unit 921, and a serial ID registration information transmission unit 930.

The communication unit 910 communicates with an interactive function of the main data stored in the first recording medium apparatus 400 to be played back by the playback/copy apparatus 500. Depending on conditions, data to be transmitted/received on a transmission line may be protected using an SSL function to prevent leakage of data on the transmission line.

When the payment request relating to the copying of the copy data is received from the interactive function of the main data stored in the first recording medium apparatus 400 to be played back by the playback/copy apparatus 500, the charging unit 911 performs charging processing using payment information such as credit card information that is received together with the payment request. For example, upon input of a name of a credit card holder and a credit card number, the payment is made from a user's bank account or a credit card account to a payment account. The payment account may be an account of the content producer 300, or may be an account of a third party who manages the application server if the third party recovers costs on behalf of the content producer 300 and collectively passes the recovered costs to the content producer 300.

The serial ID generation unit 920 generates the serial ID to be associated with the copy data to be copied. The serial ID generation unit 920 then notifies the playback/copy apparatus 500 of the generated serial ID via the communication unit 910.

The serial ID registration information generation unit 921 generates the serial ID registration information from the serial ID generated by the serial ID generation unit 920 and the content ID and the serial ID received from the playback/copy apparatus 500 via the communication unit 910.

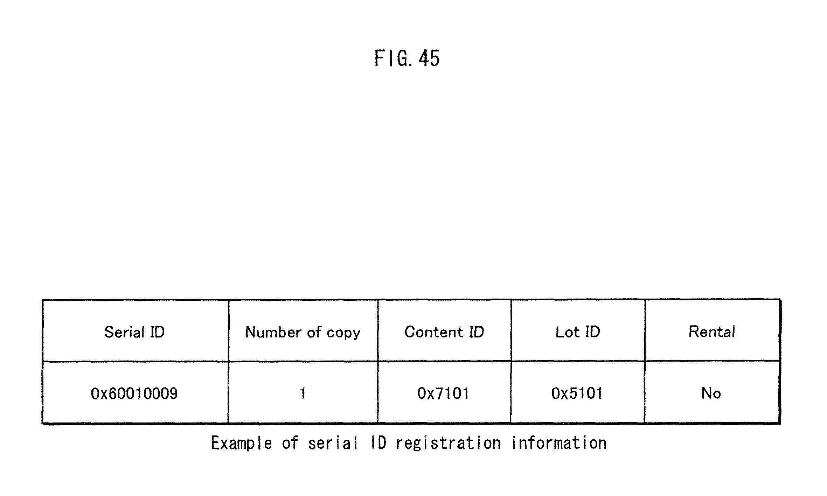

FIG. 45 shows an example of the serial ID registration information generated by the serial ID registration information generation unit 814. The "Serial ID" column contains the value "0x60010009", the "Number of copy" column contains the value "1", the "Content ID" column contains the value "0x7101", the "Lot ID" column contains the value "0x5101", and the "Rental" column contains the value "No". When the application server 900 performs the charging processing, the received payments are directly passed to the content producer 300. Therefore, it is not required for the authentication server 200 to notify the content producer 300 that the payment request may be issued, and that is why the "Rental" column contains the value "No".

It is also possible to include another column such as a "Payment notification" column in place of the "Rental" column, such that the "Payment notification" column contains the value "No" when the application server 900 generates the system ID registration information.

The serial ID registration information transmission unit 930 transmits the serial ID registration information generated by the serial ID registration information generation unit 921 to the authentication server 200.

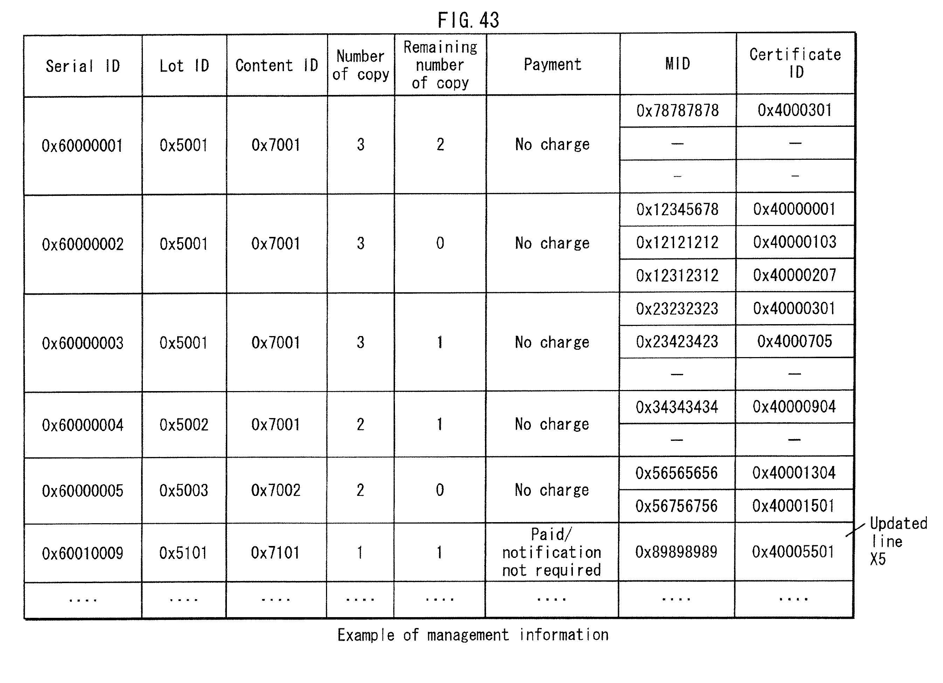

FIG. 43 shows an example of the management information stored in the management information storage unit 221 in the authentication server 200 immediately after the serial ID registration information transmission unit 930 notifies the authentication server 200 of the management information shown in FIG. 45.

A line X5 is updated in the management information in FIG. 43. In the line X5, the "Serial ID" column contains the value "0x60010009", the "Lot ID" column contains the value "0x5101", the "Content ID" column contains the value "0x7101", the "Number of copy" column contains the value "1", the "Remaining number of copy" column contains the value "0", the "Payment" column contains the value "Paid/notified", the "MID" column contains the value "0x89898989", and the "Certificate ID" column contains the value "0x400005501".

### <Charging and Serial ID Registration Flow of Application Server 900>

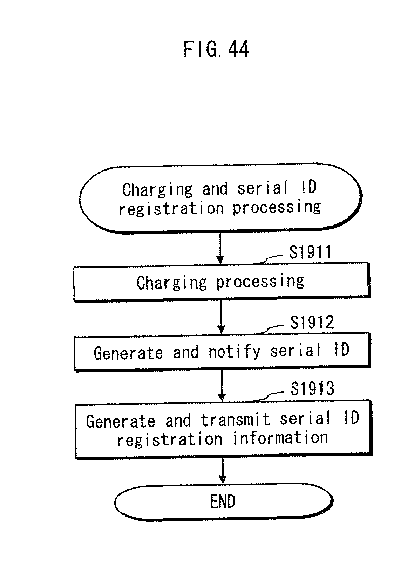

FIG. 44 shows a charging and serial ID registration flow of the application server 900.

When the payment request relating to the copying of the copy data is received from the interactive function of the main data stored in the first recording medium apparatus 400 to be played back by the playback/copy apparatus 500, the charging unit 911 performs charging processing using payment information such as credit card information that is received together with the payment request. For example, upon input of a name of a credit card holder and a credit card number, the payment is made from a user's bank account or a credit card account to a payment account (S1911).

Then, the serial ID generation unit 920 generates the serial ID to be associated with the copy data to be copied. The serial ID generation unit 920 further notifies the playback/copy apparatus 500 of the generated serial ID via the communication unit 910 (S1912).

The serial ID registration information generation unit 921 generates the serial ID registration information from the serial ID generated by the serial ID generation unit 920 and the content ID and the serial ID received from the playback/copy apparatus 500 via the communication unit 910. When the application server 900 performs the charging processing, the received payments are directly passed to the content producer 300. Therefore, it is not required for the authentication server 200 to notify the content producer 300 that the payment request may be issued, and that is why the "Rental" column contains the value "No".

It is also possible to include another column such as a "Payment notification" column in place of the "Rental" column, such that the "Payment notification" column contains the value "No" when the application server 900 generates the system ID registration information. The serial ID registration information transmission unit 930 transmits the serial ID registration information generated by the serial ID registration information generation unit 921 to the authentication server 200 (S 1913).

### [Embodiment 4]

The present embodiment introduces a system having a simpler structure than the systems pertaining to the above-described embodiments.

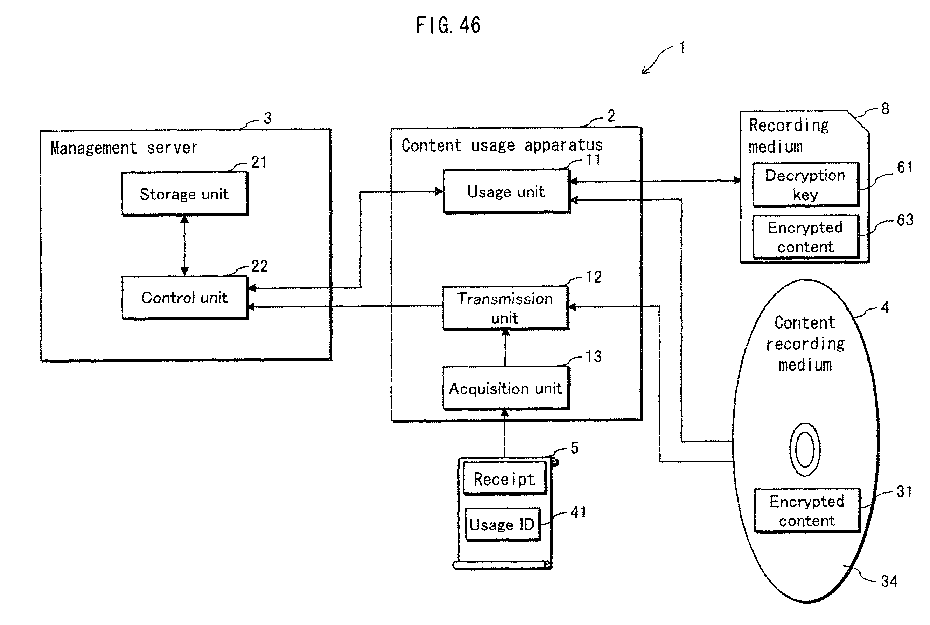

FIG. 46 shows an overall structure of a content copy system 1 pertaining to the present embodiment.

The content copy system 1 includes a content usage apparatus 2, a management server 3, a content recording medium 4, a receipt 5, and a recording medium 8.

In the following description, the content usage apparatus 2 is a BD player, the content recording medium 4 is a Blu-ray disc, and the recording medium 8 is an SD card, by way of example.

The content usage apparatus 2 uses encrypted content recorded on the content recording medium, and is composed of a usage unit 11, a transmission unit 12, and an acquisition unit 13.

The acquisition unit 13 acquires a usage ID (41) that is provided thereto in exchange for the usage fee for the content.

A brief description is now given of a specific example where the usage ID (41) is provided in exchange for the usage fee for the content. Assume that the content recording medium 4 is kept in a rental shop for rental use. The rental shop is equipped with a register apparatus. When a user rents the content recording medium 4 from the rental shop, the staff of the rental shop receives the usage fee for the content recorded on the content recording medium 4 from the user, and inputs this information to the register apparatus. Then, the register apparatus issues a usage ID and notifies the usage ID and the ID of the content to the management server 3. In practice, the usage fee is passed from the rental shop to the management server 3 via settlement processing, which will be described later.

The register apparatus also prints the usage ID on the receipt. Then, the staff of the rental shop hands the receipt to the user who rents the content recording medium 4. After the user returns home, he/she inputs the usage ID to the acquisition unit 13 in the content usage apparatus 2 by referring to the receipt. In this way, the usage ID is provided in exchange for the usage fee for the content.

It should be noted, however, that the acquisition unit 13 may acquire the usage ID (41) using a method other than the one described above. For example, the usage ID (41) may be directly notified from the management server 3 to the acquisition unit 13 via communication or the like.

The transmission unit 12 transmits the usage ID (41) acquired by the acquisition unit 13 to the management server 3 in order to obtain a decryption key for the content corresponding to the usage ID (41).

The usage unit 11 uses the content (e.g., playback, copying, etc.) The usage unit 11 particularly functions as a copy unit. The usage unit 11 receives the decryption key from the management server 3, and writes the received decryption key to another recording medium, namely the recording medium 8. At this time, the usage unit 11 reads the encrypted content from the content recording medium 4 and records the read encrypted content on the recording medium 8.

The management server 3 is composed of a storage unit 21 and a control unit 22.

The storage unit 21 stores therein the usage IDs and decryption keys in one-to-one association. Each usage ID is issued to manage the use of corresponding content. In one specific example, the storage unit 21 stores therein the key registration information and the management information, which have been described with reference to FIGs. 9 and 12, respectively. The registration information in FIG. 9 and the management information in FIG. 12 are associated with each other by a serial ID commonly owned thereby. Although the management information have recorded therein a lot ID, the number of copy, the remaining number of copy, rental identification information, an MID, and a certificate ID, these items are not particularly necessary and therefore may be omitted.

Upon receiving the usage ID (41) from the content usage apparatus 2, the control unit 22 refers to the storage unit 21, reads a decryption key for the content corresponding to the received usage ID (41), returns the read decryption key to the content usage apparatus 2, and performs the settlement processing for the usage ID (41). By way of example, the settlement processing is processing for receiving the usage fee for the content, which is collected upon providing the usage ID (41), from a collector of the usage fee for the content.

The following is a specific description of exemplary settlement processing.

Assume that the account number of the bank account of the rental shop is notified to the management server in advance, and the account number of the bank account of the management server (e.g., a content producer) is notified to the register apparatus in advance.

As mentioned earlier, when the register apparatus of the rental shop issues a usage ID, the usage ID and the ID of the content recorded on the content recording medium 4 are notified to the management server 3. Upon receiving the usage ID, the control unit 22 requests the register apparatus that has issued the usage ID to transfer the usage fee to the bank account of the management server. The register apparatus notifies the account number of the management server and the usage fee for the content to the server of the bank of the rental shop, and requests the server of the bank of the rental shop to transfer the usage fee for the content from the bank account of the rental shop to the bank account of the management server. The server of the bank of the rental shop performs processing for transferring the usage fee from the bank account of the rental shop to the bank account of the management server. The above is one example of the settlement processing. However, the present invention is not limited to the above settlement processing. For example, the settlement processing may be performed by using another general banking system or the like (e.g., via a server of a credit card company).

The following describes the operations of the content copy system 1 having the above structure.

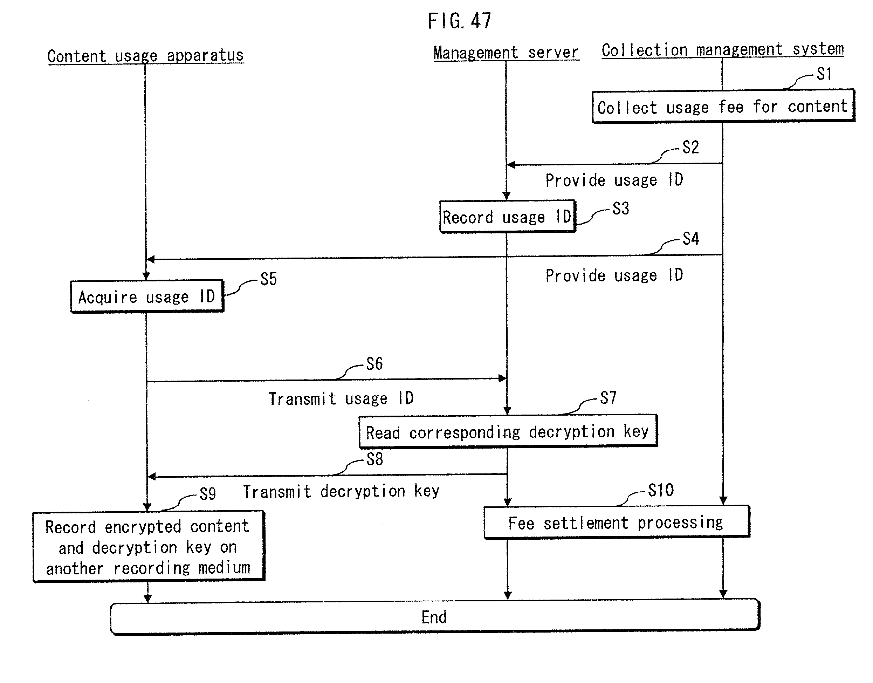

FIG. 47 is a flowchart of the operations of the content copy system 1.

The following description is given under the assumption that the usage fee for the content is collected by, for example, a collection management system (not illustrated in FIG. 46). It should be noted, however, that the present invention is not limited in this way.

First, the collection management system collects the usage fee for the content (S1). Next, the collection management system provides the usage ID (41) to the management server 3 in exchange for the usage fee for the content (S2). The management server 3 receives the usage ID (41) and stores the received usage ID (41) in the storage unit 21 in association with the content ID (S3). It is assumed here that the content associated with the usage ID (41) is identified ahead of time. The present invention, however, is not limited in this way. Alternatively, the content and the usage ID may be associated with each other by the collection management system providing the corresponding content ID together with the usage ID (41).

The acquisition unit 13 in the content usage apparatus 2 acquires the usage ID (41) provided by the collection management system (S4 and S5).

The transmission unit 12 transmits the usage ID (41) acquired by the acquisition unit 13 to the management server 3 (S6). The control unit 22 in the management server 3 acquires the usage 1D (41), and reads the decryption key corresponding to the usage ID (41) by referring to the management information and the key registration information stored in the storage unit 21 (S7). The control unit 22 transmits the read decryption key to the content usage apparatus 2 (S8).

The usage unit 11 in the content usage apparatus 2 acquires the decryption key, reads encrypted content 31 from the content recording medium 4, and records the acquired decryption key and the read encrypted content 31 to another recording medium 8 (S9).

The management server 3 performs the settlement processing with respect to the usage fee for the content collected by the collection management system (S10).

In the above manner, each time the content usage apparatus 2 copies content to the recording medium 8, the management server 3 can properly collect the usage fee in proportion to the frequency of copying.

### [Embodiment 5]

A content copy system pertaining to the present embodiment includes a key issuing authority server 6 and a rental shop apparatus 7 in addition to the structure described in Embodiment 4 above. Differences from Embodiment 4 are mainly described below.

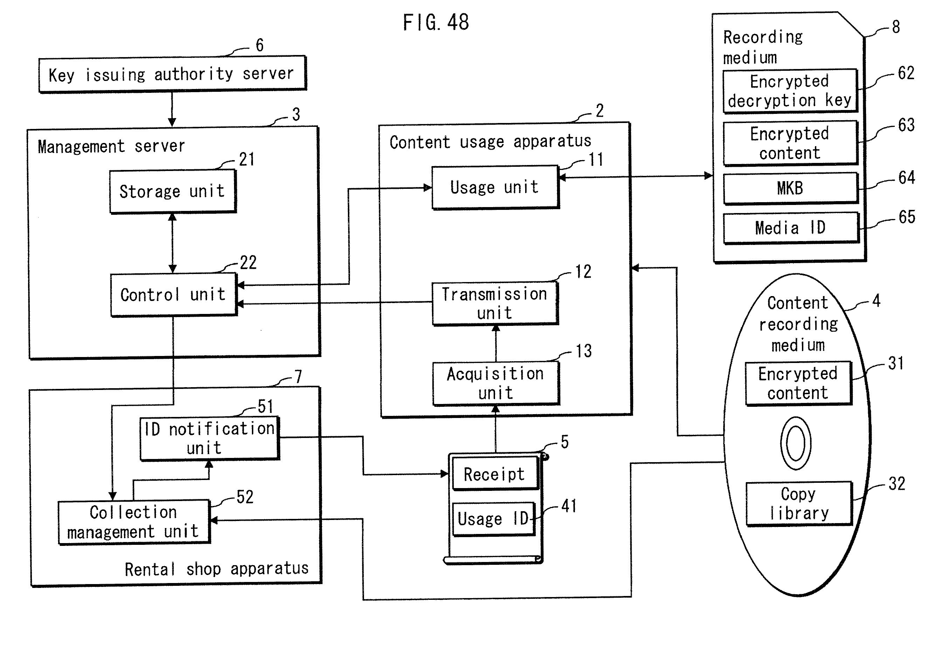

FIG. 48 shows an overall structure of a content copy system pertaining to the present embodiment.

The content copy system pertaining to the present embodiment includes a content usage apparatus 2, a management server 3, a content recording medium 4, a receipt 5, a key issuing authority server 6, a rental shop apparatus 7, and a recording medium 8.

Encrypted content 31 and a copy library 32 are recorded on the content recording medium 4.

The copy library is used in reading the encrypted content from the content recording medium, and in recording the encrypted content on another recording medium 8. Copying of the content is realized by the usage unit 11 executing the copy library. As the encrypted content and the copy library are provided while being recorded on a single content recording medium, it is possible to define content copy processing for each content, thus enabling suitable copy processing for each content.

An MKB (64) and a media ID (65) are pre-recorded on the recording medium 8. The content usage apparatus 2 records the encrypted decryption key 62 and the encrypted content 63 on the recording medium 8.

The key issuing authority server 6 issues a certificate that includes a pair of a private key and a public key and indicates whether or not the content usage apparatus 2 is an authorized apparatus.

The rental shop apparatus 7 is composed of an ID notification unit 51 and a collection management unit 52.

The ID notification unit 51 provides the usage ID (41) to the content usage apparatus 2. In the present embodiment, the ID notification unit 51 prints the usage ID (41) on the receipt 5 issued upon payment of the usage fee for the content. The usage ID (41) is indirectly provided to the content usage apparatus 2 by a user inputting the usage ID (41) using a keypad or the like of the content usage apparatus 2 with reference to the receipt 5. However, the usage ID (41) is not limited to being indirectly provided in the above manner. Alternatively, the ID notification unit 51 may directly provide the usage ID (41) to the content usage apparatus 2 via communication or the like.

The collection management unit 52 performs and manages collection of the usage fee for the content.

More specifically, the staff of the rental shop receives, from the user who wants to rent the content recording medium 4, the rental fee of the content recording medium 4 and the fee for copying (using) the content. Thereafter, the collection management unit 52 acquires information indicating the receipt of these fees via input processing or the like.

The control unit 22 in the management server 3 performs mutual authentication with the content usage apparatus 2 by using the above-described private key and public key. The control unit 22 in the management server 3 returns the decryption key to the content usage apparatus 2 only when it is confirmed, as a result of the mutual authentication, that the content usage apparatus 2 is an authorized apparatus.

The following describes the operations of the content copy system having the above structure.

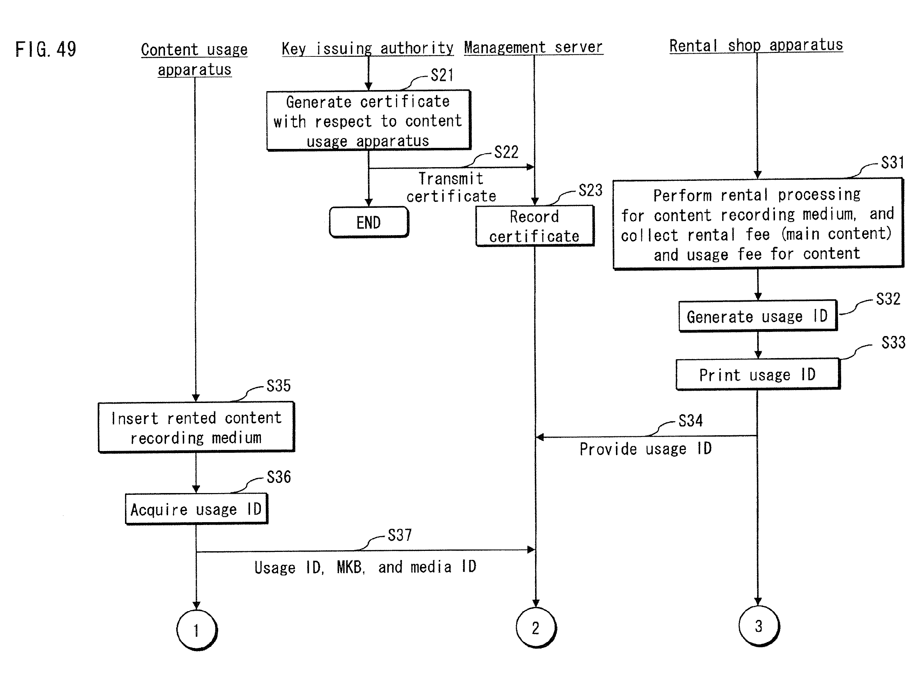

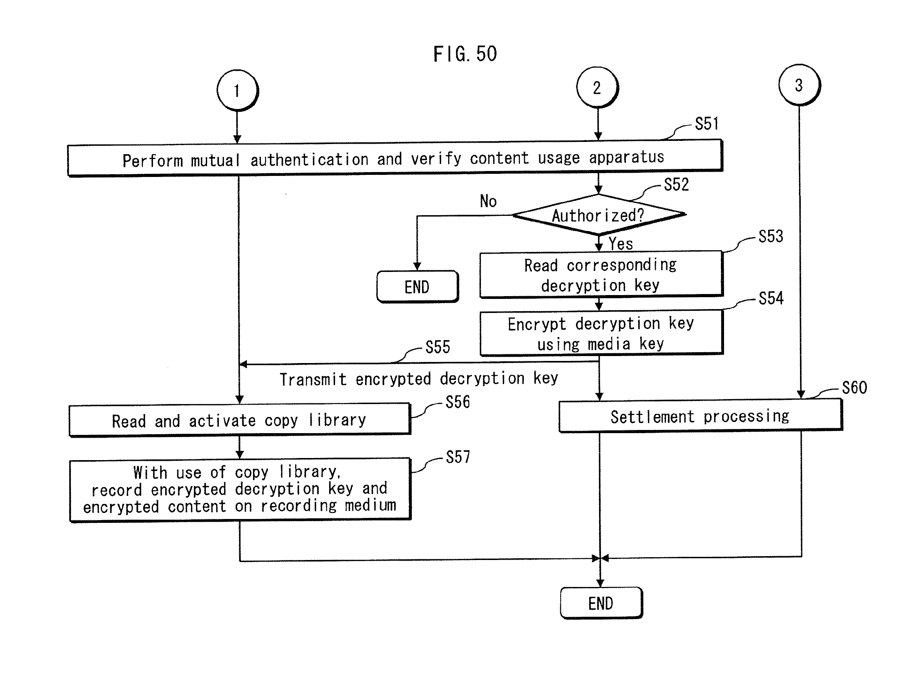

FIGs. 49 and 50 are flowcharts of the operations of the content copy system.

First, the key issuing authority server 6 generates a certificate certifying that the content usage apparatus 2 is an authorized apparatus (S21), and securely transmits the generated certificate to the management server 3 (S22). The management server 3 receives the certificate and records the received certificate therein (S23).

Next, the rental shop apparatus 7 performs (i) processing required to rent the content recording medium 4 (e.g., reading a barcode), (ii) processing for collecting the rental fee for using the main content and the fee for content (sub-content) to be used after being recorded on the recording medium 8, and (iii) processing for managing collection of these fees (S31). After these fees are collected, the rental shop apparatus generates the usage ID (41) (S32), and prints the generated usage ID (41) on the receipt 5 (S33). The usage ID (41) is issued in exchange for the fees to authorize the copying of the content. The usage ID (41) has a unique value. The rental shop apparatus 7 provides the usage ID (41) to the management server 3 via communication or the like (S34).

After the user of the content usage apparatus 2 returns home from the rental shop, he/she loads the content recording medium 4 into the content usage apparatus 2 (S35). Then, the acquisition unit 13 in the content usage apparatus 2 acquires the usage ID (41) via, for example, input made by a user operation (S36). Thereafter, the transmission unit reads the MKB from the recording medium 8, and transmits the usage ID (41), the MKB (64) and the media ID (65) to the management server 3 (S37). Upon receiving the usage ID (41) and the MKB (64), the management server 3 verifies the validity of the content usage apparatus 2 by performing mutual authentication processing with the content usage apparatus 2, from which the usage IDs, etc. have been provided, with use of the private key and the public key (S51).

The control unit 22 in the management server 3 judges whether or not the content usage apparatus 2 is an authorized apparatus (S52). When the content usage apparatus is not an authorized apparatus (the "No" branch of S52), the processing is ended.

When the content usage apparatus 2 is an authorized apparatus (the "Yes" branch of S52), the control unit 22 reads the decryption key corresponding to the received usage ID (41) from the storage unit 21 (S53). In this way, only authorized content usage apparatuses are allowed to copy the content.

Then, the control unit 22 generates a media key by using the MKB (64) and the media ID (65), and encrypts the decryption key by using the generated media key (S54). Thereafter, the control unit 22 transmits the encrypted decryption key (62) to the content usage apparatus 2 (S55).

The usage unit 11 in the content usage apparatus 2 reads and activates the copy library (S56). In this way, the usage unit 11 functions as a copy unit. The copy library may not be used if the usage unit 11 has functions of a copy unit from the beginning.

As a result of activating the copy library, the usage unit 11 records the encrypted decryption key and the encrypted content on the recording medium 8 (S57).

Once the encrypted decryption key has been transmitted to the content usage apparatus 2 (S55), the management server 3 performs the settlement processing with respect to the fee for copying the encrypted content, which is managed by the rental shop apparatus (S60).

With the above structure, the usage fee for sub-content can be collected, for example, by cash in a rental shop, and the sub-content can be distributed via a rental content recording medium. Furthermore, each time the content usage apparatus 2 copies the sub-content to the recording medium 8, the above structure enables the management server 3 to properly collect the usage fee in proportion to the frequency of copying.

### [INDUSTRIAL APPLICABILITY]

A content copy system of the present invention is suitable for a system that makes use of a rental optical medium to distribute, together with main content such as a movie, sub-content for which the usage fee must be collected separately from the usage fee for the main content.

### [REFERENCE SIGNS LIST]

- 100: key issuing authority
- 200: authentication server
- 300: content production apparatus
- 400: first recording medium apparatus
- 500: playback/copy apparatus
- 600: second recording medium apparatus
- 700: playback apparatus
- 800: rental shop apparatus
- 900: application server

## Claims

1. A content copy system including a management server and a content usage apparatus that uses encrypted content recorded on a content recording medium,
the content usage apparatus comprising:
an acquisition unit configured to acquire a usage 1D that is provided thereto in exchange for a usage fee for the encrypted content;
a transmission unit configured to transmit the acquired usage ID to the management server in order to acquire one of content decryption keys that corresponds to the acquired usage ID; and
a copy unit configured to receive the one of content decryption keys from the management server, and record the one of content decryption keys and the encrypted content on another recording medium,
the management server comprising:
a storage unit storing therein, in one-to-one correspondence, (i) usage IDs each for managing a different one of contents and (ii) the content decryption keys; and
a control unit configured to, upon receiving the usage ID transmitted from the content usage apparatus, refer to the storage unit, transmit the one of content decryption keys that corresponds to the received usage ID to the content usage apparatus, and perform settlement processing for the received usage ID.

2. The content copy system of Claim 1, wherein
collection of the usage fee for the encrypted content is managed by a collection management apparatus,
the usage ID is provided to the acquisition unit upon the collection management apparatus acknowledging that the usage fee for the encrypted content has been collected, and
the settlement processing is to recover the usage fee for the encrypted content from the collection management apparatus.

3. The content copy system of Claim 2, wherein
the collection management apparatus is used in a rental shop that rents the content recording medium,
the usage fee for the encrypted content is collected in the rental shop when the content recording medium is to be rented, and
each of the usage IDs stored in the storage unit has been notified by the collection management apparatus as corresponding to a different one of encrypted contents recorded on rented content recording media.

4. The content copy system of Claim 3, wherein
the collection management apparatus prints the usage ID to be provided to the acquisition unit on a recording sheet upon acknowledging that the usage fee for the encrypted content has been collected, and
the acquisition unit acquires the usage ID provided thereto via an input operation performed by a user who has referred to the recording sheet with the usage ID printed thereon.

5. The content copy system of Claim 4, wherein
the content recording medium is for rental only and has recorded thereon main content that is different from the encrypted content, and
collection of the usage fee for the encrypted content is performed separately from collection of a usage fee for the main content.

6. The content copy system of Claim 1, wherein
said another recording medium has recorded thereon a media ID and a media key block (MKB) that are used in generating a media key,
the transmission unit reads the media ID and the MKB from said another recording medium, and transmits the read media ID and MKB to the management server in addition to the usage ID,
the control unit transmits the one of content decryption keys to the content usage apparatus after generating the media key with use of the media ID and the MKB and encrypting the one of content decryption keys with use of the media key, and
the copy unit records the one of content decryption keys that has been encrypted by the control unit on said another recording medium.

7. The content copy system of Claim 1 further including a key issuing authority that issues a private key and a certificate including a public key to be paired with the private key, wherein
the key issuing authority securely transmits the certificate to the management server, the certificate showing whether or not the content usage apparatus is an authorized apparatus, and
the control unit performs mutual authentication with the content usage apparatus by using the private key and the public key before transmission of the one of content decryption keys, and transmits the one of content decryption keys to the content usage apparatus only when it has been confirmed that the content usage apparatus is an authorized apparatus.

8. The content copy system of Claim 1**,** wherein
the control unit limits the number of transmissions of the one of content decryption keys to a predetermined number.

9. The content copy system of Claim 1, wherein
the content recording medium has recorded thereon a copy library,
the copy library is used in reading the encrypted content from the content recording medium and in recording the encrypted content on said another recording medium, and
the copy unit records the encrypted content on said another recording medium by reading the copy library from the content recording medium and executing the read copy library.

10. A content usage apparatus that uses encrypted content recorded on a content recording medium and is used together with a management server,
the management server comprising:
a storage unit storing therein, in one-to-one correspondence, (i) usage IDs each for managing a different one of contents and (ii) content decryption keys; and
a control unit configured to, upon receiving a usage ID transmitted from the content usage apparatus, refer to the storage unit, transmit one of the content decryption keys that corresponds to the received usage ID to the content usage apparatus, and perform settlement processing for the received usage ID,
the content usage apparatus comprising:
an acquisition unit configured to acquire the usage ID that is provided thereto in exchange for a usage fee for the encrypted content;
a transmission unit configured to transmit the acquired usage ID to the management server in order to acquire the one of the content decryption keys that corresponds to the acquired usage ID; and
a copy unit configured to receive the one of the content decryption keys from the management server, and record the one of the content decryption keys and the encrypted content on another recording medium.

11. A content usage method for using encrypted content recorded on a content recording medium, the content usage method being used together with a management server,
the management server comprising:
a storage unit storing therein, in one-to-one correspondence, (i) usage IDs each for managing a different one of contents and (ii) content decryption keys; and
a control unit configured to, upon receiving a usage ID transmitted from a content usage apparatus, refer to the storage unit, transmit one of the content decryption keys that corresponds to the received usage ID to the content usage apparatus, and perform settlement processing for the received usage ID,
the content usage method comprising:
an acquisition step of acquiring the usage ID that is provided in exchange for a usage fee for the encrypted content;
a transmission step of transmitting the acquired usage ID to the management server in order to acquire the one of the content decryption keys that corresponds to the acquired usage ID; and
a copy step of receiving the one of the content decryption keys from the management server, and recording the one of the content decryption keys and the encrypted content on another recording medium.

12. A content usage program used in a content usage apparatus that uses encrypted content recorded on a content recording medium and is used together with a management server,
the management server comprising:
a storage unit storing therein, in one-to-one correspondence, (i) usage IDs each for managing a different one of contents and (ii) content decryption keys; and
a control unit configured to, upon receiving a usage ID transmitted from the content usage apparatus, refer to the storage unit, transmit one of the content decryption keys that corresponds to the received usage ID to the content usage apparatus, and perform settlement processing for the received usage ID,
the content usage program causing a computer to perform:
an acquisition step of acquiring the usage ID that is provided in exchange for a usage fee for the encrypted content;
a transmission step of transmitting the acquired usage ID to the management server in order to acquire the one of the content decryption keys that corresponds to the acquired usage ID; and
a copy step of receiving the one of the content decryption keys from the management server, and recording the one of the content decryption keys and the encrypted content on another recording medium.

13. An integrated circuit used in a content usage apparatus that uses encrypted content recorded on a content recording medium and is used together with a management server,
the management server comprising:
a storage unit storing therein, in one-to-one correspondence, (i) usage IDs each for managing a different one of contents and (ii) content decryption keys; and
a control unit configured to, upon receiving a usage ID transmitted from the content usage apparatus, refer to the storage unit, transmit one of the content decryption keys that corresponds to the received usage ID to the content usage apparatus, and perform settlement processing for the received usage ID,
the integrated circuit comprising:
an acquisition unit configured to acquire the usage ID that is provided thereto in exchange for a usage fee for the encrypted content;
a transmission unit configured to transmit the acquired usage ID to the management server in order to acquire the one of the content decryption keys that corresponds to the acquired usage ID; and
a copy unit configured to receive the one of the content decryption keys from the management server, and record the one of the content decryption keys and the encrypted content on another recording medium.

14. A management server used together with a content usage apparatus that uses encrypted content recorded on a content recording medium,
the content usage apparatus comprising:
an acquisition unit configured to acquire a usage ID that is provided thereto in exchange for a usage fee for the encrypted content;
a transmission unit configured to transmit the acquired usage ID to the management server in order to acquire one of content decryption keys that corresponds to the acquired usage ID; and
a copy unit configured to receive the one of content decryption keys from the management server, and record the one of content decryption keys and the encrypted content on another recording medium,
the management server comprising:
a storage unit storing therein, in one-to-one correspondence, (i) usage IDs each for managing a different one of contents and (ii) the content decryption keys; and
a control unit configured to, upon receiving the usage ID transmitted from the content usage apparatus, refer to the storage unit, transmit the one of content decryption keys that corresponds to the received usage ID to the content usage apparatus, and perform settlement processing for the received usage ID.
